# EUROPEAN PATENT SPECIFICATION

(11) **EP 3 284 657 B1**
(45) Date of publication and mention of the grant of the patent: **19.08.2020**
(21) Application number: 16776338.2
(22) Date of filing: 24.02.2016
(51) Int. Cl.: B62D 25/12, B60T 7/04, B60T 7/08, B62D 25/10, E05B 83/16

(54) **WORKING VEHICLE**
NUTZFAHRZEUG
VÉHICULE DE TRAVAIL

(30) Priority: 07.04.2015 JP 2015078697; 24.04.2015 JP 2015089215
(43) Date of publication of application: 21.02.2018
(73) Proprietor: Yanmar Co., Ltd., Osaka-shi, Osaka 530-8311 (JP)
(72) Inventor: MATSUI, Yutaka, Osaka-shi Osaka 580-8311 (JP); MATSUBAYASHI, Toshikazu, Osaka-shi Osaka 580-8311 (JP)
(74) Representative: Hering, Hartmut
(86) International application number: PCT/JP2016/055458
(87) International publication number: WO 2016/163169

(56) References cited:
- WO-A2-98/07594
- DE-C1- 3 730 280
- JP-A- S58 218 565
- JP-A- S58 218 565
- JP-U- S62 141 866
- JP-U- S62 141 866
- JP-Y2- H0 725 417

## Description

### Technical Field

The present invention relates to a working vehicle having an engine hood, and more specifically, relates to a lock mechanism of the engine hood.

### Background Art

In a working vehicle exemplified by a tractor, an engine and the like are placed in a front portion of its machine body, and there is an engine hood configured to open or close to cover them. In a front portion of the engine hood for example, a lock mechanism configured to keep the engine hood closed is provided.

Patent Literature 1 (hereinafter, PTL 1) discloses a hood locking device for a tractor, which is described as follows. Namely, an engine hood is formed by: an engine hood main body whose upper-rear portion is pivotally supported with respect to a vehicle body in such a manner as to open/close; and an engine hood lower-front portion positioned in a lower-front of the engine hood main body and fixed to the vehicle body. The lower-front portion of the engine hood main body is made lockable to the front portion of the vehicle body by locking means. To the front portion of the vehicle body, a lock stay is provided behind the engine hood lower-front portion. Above the lock stay, there is provided a lock member which pivots to disengageably engage with an engagement tool provided in the lower-front portion of the engine hood. There is provided an unlocking member which operates to pivot the lock member through a back-and-forth movement. A front portion of this unlocking member penetrates, and protrude from, the lower-front portion of the engine hood.

Meanwhile, efforts to reduce the burden on the global environment are regarded as an urgent task. Tractors are no exceptions, and emission constraint is gradually strengthened throughout the world. Under such a circumstance, tractors with an exhaust processing device configured to purify exhaust gas are introduced one after another. More specifically, to remove particles containing harmful substances in exhaust gas generated in the diesel engine, a Diesel Particulate Filter (DPF) is attached. The DPF traps the particles by a filter. However, continuing the trap of the exhaust gas causes clogging of the filter, leading to a drop in its function. To address this issue, the particles deposited on the filter are removed to restore the filter. As one of the methods for restoring the filter, there is one which increases the temperature of the filter to burn the particles deposited. In this case, restoring the filter, there is one which increases the temperature of the filter to burn the particles deposited. In this case, the temperature of the filter reaches several hundred degrees, and is extremely high-temperature.

Patent Literature 2 (hereinafter, PTL 2) discloses a diesel engine built-in and accommodated in an engine room of a working vehicle and the like, in which a muffler connecting to this engine is positioned close to the upper side of an engine main body, and an oxidation catalyst and a diesel particulate filter, or only the diesel particulate filter is/are provided inside the muffler.

### Citation List Patent Literature

PTL1: Japanese Patent Application Laid-Open No. H08-026140 (1996)
PTL 2: Japanese Patent Application Laid-Open No. 2008-031955

JP S62 141 866 U, which document represents the most relevant prior art document, discloses a working vehicle including an engine hood configured to be openable and closable with respect to a machine body, and a driving unit behind the engine hood, including: a lock mechanism configured to lock the engine hood; an operation unit configured to unlock the lock mechanism; and a dynamic force transmission member configured to transmit operation of the operation unit to the lock mechanism, between the lock mechanism and the operation unit, wherein the lock mechanism is disposed in the engine hood, on one side of the front-rear direction of the machine body, and the operation unit is in the driving unit.

### Summary of Invention

### Technical Problem

In cases of the hood locking device of the tractor in PTL 1, unlocking is troublesome because a worker needs to get off the driver seat and go around to the front of the engine hood. Therefore, improvement in workability at a time of unlocking is desired. It should be noted that, in Europe too, to obtain a certificate for selling agricultural vehicles, i.e., a regulation for having them homologated, it is advised that another cover serving as a releasing mechanism requiring key or a different tool be attached to the unlocking member disclosed in PTL 1. Further, in the structure of the diesel engine of PTL 2, an extremely high temperature diesel particulate filter is installed in the engine hood between the hood lock mechanism and the driving unit such as a cabin. In such a structure, there is a need for considering the path from the lock mechanism to the unlocking member and the position of attaching the unlocking member on the floor or in the cabin and the like.

As to the unlocking member on the other hand, it is sufficient if it is available in situations requiring the operation.

In view of the above, it is an object of the present invention to provide a working vehicle having an engine hood lock mechanism excellent in its workability, in situations where unlocking is required.

### Solution to Problem

To achieve the above problems, according to the present invention the working vehicle as described above with respect to JP S62 141 866 U is further developed as follows. Namely, the working vehicle includes: a dashboard on a front side of the driving unit; and brake pedal devices below the dashboard, which devices are configured to activate and deactivate braking devices, wherein the operation unit is in an operable state, when the braking devices are operated, and a parking brake is active, and the operation unit is in an inoperable state when the parking brake is inactive. Especially, the brake pedal devices each includes an arm which extends below the dashboard, and rotates with respect to the machine body, the operation unit is attached to the arm, when the parking brake is inactive, the operation unit is close to the dashboard and an operation area for the operation unit is vanished; and when the parking brake is active, the operation unit is apart from the dashboard so that the operation area for the operation unit is ensured.

Further, the working vehicle may include a dashboard on a front side of the driving unit, wherein the operation unit is provided below the dashboard.

Further, the operation unit may be positioned to be blocked by the dashboard, when the parking brake is inactive, and positioned to be exposed from the dashboard when the parking brake is active.

Further, the brake pedal devices may be structured by a pair of left and right brake pedal devices which are associated with left and right braking devices; a connection member connecting the left and right brake pedal devices into one piece is further provided; a stepping-in operation on one brake pedal device out of the left and right brake pedal devices holds the parking brake in an active state, and the operation unit is attached to the arm of another one of the brake pedal devices.

The working vehicle may further include: a hand brake device configured to activate and deactivate another braking device; and another dynamic force transmission member between the brake pedal devices and the hand brake device, wherein the brake pedal devices operate in association with an operation of activating and deactivating the other brake pedal devices by the hand brake device.

Further, the engine hood may house an exhaust processing device on either side relative to the left/right direction of the machine body; and the dynamic force transmission member is installed on the opposite side of the exhaust processing device relative to the machine body.

Further, the lock mechanism may include: a lock bar attached to one side out of the machine body and the engine hood; a fitting member attached to the other side out of the machine body and the engine hood, which includes a fitting portion where the lock bar fits; a lock catch attached to the other side, and including a hook portion configured to rotate in association with a movement of the dynamic force transmission member; an elastic member attached between the machine body and the engine hood, which biases the engine hood in a direction of opening, wherein, when the engine hood is closed against the biasing force of the elastic member, and when the lock bar is positioned at the fitting portion, the hook portion locks the lock bar, thus locking the engine hood.

Further, the dynamic force transmission member may be structured by a wire.

Further, the dynamic force transmission member may be fixed, by a clamp, to a fix plate disposed on the opposite side of the exhaust processing device relative to the left and right of the machine body.

Further, the driving unit may be structured by a cabin.

### Advantageous Effects of Invention

The present invention can provide a working vehicle having an engine hood lock mechanism excellent in its workability, in situations where unlocking is required, because the working vehicle including an engine hood configured to be openable and closable with respect to a machine body, and a driving unit behind the engine hood, includes: a lock mechanism configured to lock the engine hood; an operation unit configured to unlock the lock mechanism; and a dynamic force transmission member configured to transmit operation of the operation unit to the lock mechanism, between the lock mechanism and the operation unit, wherein the lock mechanism is disposed in the engine hood, on one side of the front-rear direction of the machine body, and the operation unit is in the driving unit.

Further, a structure of the working vehicle including a dashboard on a front side of the driving unit, wherein the operation unit is provided below the dashboard can provide a working vehicle having an engine hood lock mechanism excellent in its workability.

Further, mistakes in operation can be prevented, because the working vehicle includes: a dashboard on a front side of the driving unit; and brake pedal devices below the dashboard, which devices are configured to activate and deactivate braking devices, wherein the operation unit is in an operable state, when the braking devices are operated, and a parking brake is active, and the operation unit is in an inoperable state when the parking brake is inactive. Therefore, it is possible to provide a working vehicle having an engine hood lock mechanism excellent in its workability, in situations where unlocking is required.

Further, an operable state and an inoperable state of the operation lever can be physically switched, and mistakes in operation can be prevented with a structure such that: the brake pedal devices each includes an arm which extends below the dashboard, and rotates with respect to the machine body; the operation unit is attached to the arm; when the parking brake is inactive, the operation unit is close to the dashboard and an operation area for the operation unit is vanished; and when the parking brake is active, the operation unit is apart from the dashboard so that the operation area for the operation unit is ensured. Therefore, it is possible to provide a working vehicle having an engine hood lock mechanism excellent in its workability, in situations where unlocking is required.

Further, an operable state and an inoperable state of the operation lever can be visually switched, and mistakes in operation can be prevented, with a structure such that the operation unit is positioned to be blocked by the dashboard when the parking brake is inactive, and positioned to be exposed from the dashboard when the parking brake is active. Therefore, it is possible to provide a working vehicle having an engine hood lock mechanism excellent in its workability, in situations where unlocking is required.

Further, according to a structure such that the brake pedal devices are structured by a pair of left and right brake pedal devices which are associated with left and right braking devices; a connection member connecting the left and right brake pedal devices into one piece is further provided; a stepping-in operation on one brake pedal device out of the left and right brake pedal devices holds the parking brake in an active state, and the operation unit is attached to the arm of another one of the brake pedal devices, the operable state of the operation unit is prevented while the left and right brake pedal devices are not linked to each other, and mistakes in operation can be prevented. Therefore, it is possible to provide a working vehicle having an engine hood lock mechanism excellent in its workability, in situations where unlocking is required.

The working vehicle further includes: a hand brake device configured to activate and deactivate another braking device; and another dynamic force transmission member between the brake pedal devices and the hand brake device, wherein the brake pedal devices operate in association with an operation of activating and deactivating the other brake pedal devices by the hand brake device. Therefore, the operable state and the inoperable state of the operation unit can be switched by two systems of the brake pedal device and the hand brake device, and hence mistakes in operation can be prevented. Therefore, it is possible to provide a working vehicle having an engine hood lock mechanism excellent in its workability, in situations where unlocking is required.

Further, with a structure such that the engine hood houses an exhaust processing device on either side relative to the left/right direction of the machine body; and the dynamic force transmission member is installed on the opposite side of the exhaust processing device relative to the machine body, it is possible to provide a working vehicle having an engine hood lock mechanism hardly affected by heat and excellent in its workability in situations where unlocking is required.

Further, it is possible to provide a working vehicle having an engine hood lock mechanism excellent in its workability, in situations where unlocking is required, because the lock mechanism includes: a lock bar attached to one side out of the machine body and the engine hood; a fitting member attached to the other side out of the machine body and the engine hood, which includes a fitting portion where the lock bar fits; a lock catch attached to the other side, and including a hook portion configured to rotate in association with a movement of the dynamic force transmission member; an elastic member attached between the machine body and the engine hood, which biases the engine hood in a direction of opening, wherein, when the engine hood is closed against the biasing force of the elastic member, and when the lock bar is positioned at the fitting portion, the hook portion locks the lock bar, thus locking the engine hood.

Further, since the dynamic force transmission member is structured by a wire, it is possible to provide a working vehicle having an engine hood lock mechanism hardly affected by heat and excellent in its workability.

Further, a structure such that the dynamic force transmission member is fixed, by a clamp, to a fix plate disposed on the opposite side of the exhaust processing device relative to the left and right of the machine body, can provide a working vehicle having an engine hood lock mechanism even less hardly affected by heat and excellent in its workability.

Further, a structure in which the driving unit is structured by a cabin can provide a working vehicle having an engine hood lock mechanism further excellent in its workability, in situations where unlocking is required.

### Brief Description of Drawings

[FIG. 1] A side view showing a tractor as an example working vehicle related to a present embodiment, in which a rotary tiller apparatus as an example working apparatus is equipped.
[FIG. 2] A plan view showing an example overview of inside and the surrounding of a cabin.
[FIG. 3] A side view showing an example overview of a structure inside an engine hood.
[FIG. 4] A perspective view showing an example lock mechanism for the engine hood.
[FIG. 5] A front elevational view showing an example state in which a lock catch of the lock mechanism is not rotated.
[FIG. 6] A front elevational view showing an example state in which a lock catch of the lock mechanism is rotated.
[FIG. 7] A side view showing an example overview of a structure of an engine and a DPF inside an engine hood.
[FIG. 8] A plan view showing an example overview of a structure inside an engine hood.
[FIG. 9] A side view showing an example overview of a connection structure of a brake pedal device.
[FIG. 10] A front elevational view showing an example of the brake pedal device.
[FIG. 11] A side view showing an example brake pedal device.
[FIG. 12] A perspective view of a tractor showing an example arrangement of a wire.
[FIG. 13] A plan view showing an overview of structure inside an engine hood related to a modification of the tractor.
[FIG. 14] A side view showing an example brake pedal device related to another embodiment.
[FIG. 15] A side view showing a state where the brake pedal device related to the other embodiment is rotated.
[FIG. 16] A side view showing a modification of the braking device related to the other embodiment.

### Description of Embodiment

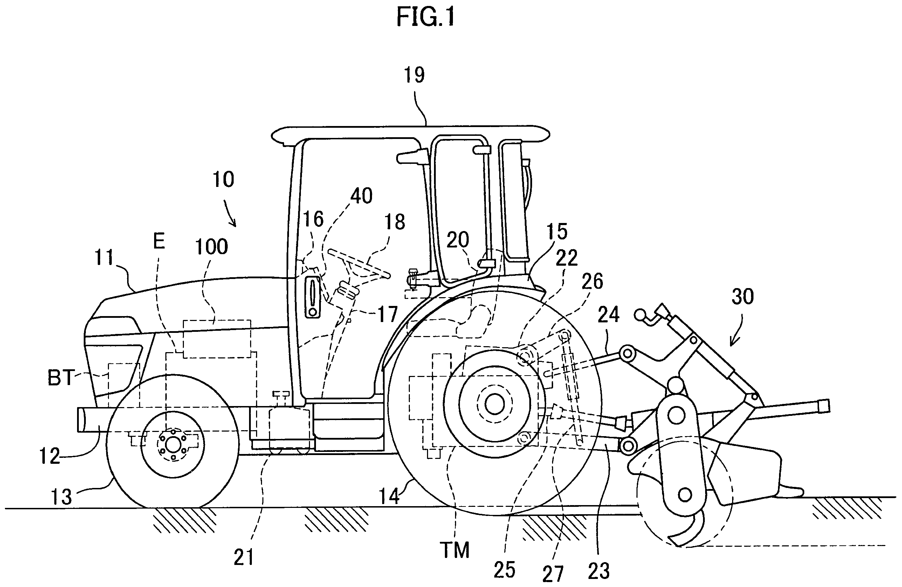

The following describes in detail an embodiment of the present invention, with reference to attached drawings. FIG. 1 is a side view showing a tractor 10 as an example working vehicle related to a present embodiment, in which a rotary tiller apparatus 30 as an example working apparatus is equipped. It should be noted that in the following, for the sake of convenience, left side of FIG. 1 which is an advancing direction of the tractor 10 is referred to as a frontward direction, and a horizontal direction, i.e., a direction from a viewer towards the sheet of FIG. 1, which is perpendicular to the advancing direction is referred to as left/right direction.

The tractor 10 exemplified in FIG. 1 includes in its engine hood 11, an engine E, a battery BT, a DPF 100 as an example of exhaust processing device, a not-shown radiator, a cooling fan, an air cleaner, and a not-shown power generator, and the like. The tractor 10, for example, has an opening/closing shaft with the left/right direction as a fulcrum at the upper portion on the rear side of the engine hood 11. The engine hood 11 is configured to open and close with respect to the machine body with the opening/closing shaft as the fulcrum. The engine E, the battery BT, the power generator, and the radiator are placed on a chassis 12. As the engine E, for example, an electronic control type common-rail diesel engine is used. The common-rail is also called accumulation type. The power generator is joined to an output unit of the engine E and is driven by the engine E to operate. The battery BT is connected to the power generator. The tractor 10 is configured to accumulate electricity generated by the power generator in the battery BT.

The tractor 10 has front wheels 13, 13 on the left and right side of the front part of the machine body relative to the advancing direction, and has rear wheels 14, 14 on the left and right side of the rear part. That is, in the tractor 10, its traveling body is supported so as to be able to travel by the wheels. Fenders 15, 15 are provided so as to cover the left and right rear wheels 14, 14 respectively from above and from the inside of the tractor 10. It should be noted that the tractor 10 may have a structure in which a crawler is used for the traveling device.

The tractor 10 has a driving unit behind the engine hood 11. More specifically, behind the engine hood 11, a dashboard 16 is provided via a not-shown air cut plate (not shown). The dashboard 16 is provided with an instrument panel 40 as an indication unit for indicating the speed, the remaining fuel amount, and the like. Behind the dashboard 16, a steering column cover 17 is provided adjacent to the dashboard 16. On the upper end of the steering column cover 17, a steering 18 is provided protruding from the steering column cover 17.

Behind the steering column cover 17, the driver sheet 20 is provided at a predetermined distance from the steering column cover 17. The driver sheet 20 is arranged between the left and right fenders 15, 15. The driver sheet 20, the steering 18, and the like are covered by the cabin 19. In other words, the above-mentioned driving unit is structured by the cabin 19.

It should be noted that the tractor 10 is not limited to the structure having the cabin 19 and may be structured such that ROPS (Roll-Over Protective Structures) protrudes upward at the rear ends of the left and right fenders 15, 15.

A fuel tank 21 for supplying fuel to the engine E is provided on the lower side of the cabin 19. The position of the fuel tank 21 is not limited, and may be, for example, a side surface of the cabin 19, behind the driver sheet 20, and the like. A not-shown fuel supply path from the fuel tank 21 to the engine E is connected, via a fuel filter, to a fuel pump, a common rail, and to a plurality of cylinders of the engine E through fuel injection valves of a plurality of injectors connected to the common rail. The fuel pump which supplies the fuel is configured to pressure-feed the fuel in the fuel tank 21 to the common rail. The common rail is configured to accumulate a high-pressure fuel. By controlling opening/closing of the fuel injection valve of a type whose opening/closing control, the high-pressure fuel in the common rail is injected from the injector to each cylinder of the engine E.

Below the driver sheet 20, a transmission case TM is arranged which includes therein a transmission as a transmission serving as a not shown transmission mechanism configured to perform, for example, stepless shifting of the traveling speed of the tractor 10. The transmission case TM is fixed to a rear portion of the chassis 12. The transmission has a function of transmitting drive force of the engine E to the rear wheels 14, 14. It should be noted that the tractor 10 may be structured so the drive force of engine E is transmitted to the front wheels 13, 13.

On the top surface of the rear portion of the transmission case TM, for example, a hydraulic working apparatus elevation mechanism 22 is attached which ascends and descends the rotary tiller apparatus 30 equipped as the working apparatus. It should be noted that the working apparatus elevation mechanism 22 is not limited to a hydraulic type, as long as it is capable of ascending and descending the working apparatus. For example, a mechanical type using gears may be adopted.

The rotary tiller apparatus 30 is linked to the rear side of the transmission case TM of the tractor 10, through a three-point link mechanism constituted by a pair of left and right lower-links 23, 23, and a top-link 24. The front ends of the left and right lower-links 23, 23 are rotatably connected to the left and right side surfaces of the rear portion of the transmission case TM, respectively. The front end of the top-link 24 is rotatably connected to the rear portion of the working apparatus elevation mechanism 22. A PTO (Power Take-Off) shaft 25 for transmitting the drive force of the engine E is connected to the engine E in an interlocking manner, and protrudes rearward from the transmission case TM. The PTO shaft 25 is connected to the input shaft of the rotary tiller apparatus 30 in an interlocking manner.

The working apparatus elevation mechanism 22 has a pair of left and right lift-arms 26, 26 each of which is rotated by a not shown elevation hydraulic cylinder. The left and right lift-arms 26, 26 are linked to the left and right lower-links 23, 23, via left and right lift-rods 27, 27, respectively. The left and right lift-arms 26, 26 are configured so that rotating them ascends or descends the rotary tiller apparatus 30 via the left and right lift-rods 27, 27 and the left and right lower-links 23, 23.

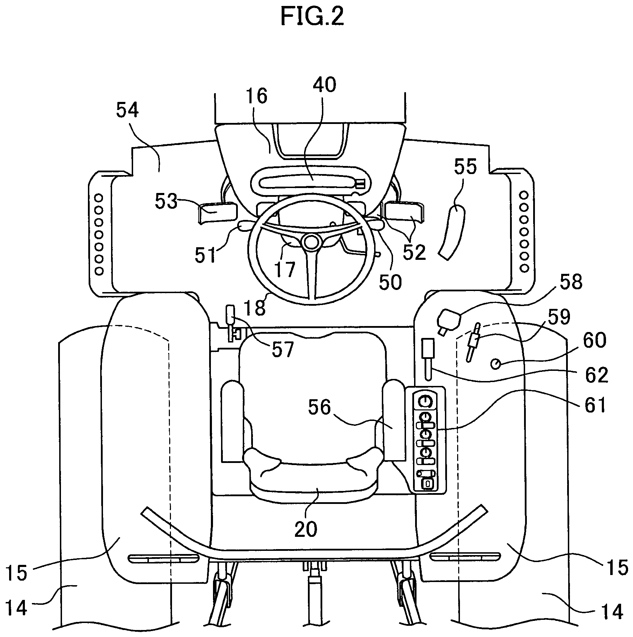

Next, the following describes the structure of the driver sheet 20 and its surrounding. FIG. 2 is a plan view showing an example overview of inside and the surrounding of a cabin 19 (see FIG. 1). As hereinabove mentioned, the dashboard 16 is provided with an instrument panel 40, and a steering 18 in a substantially circular shape in plan view is provided to the upper end of the steering column cover 17.

On the right side of the steering column cover 17, there is provided an accelerator lever 50 which sets and maintains an output rotation number (rotation speed) of the engine E. On the left side of the steering column cover 17, there is provided a reverser lever 51 (forward/backward movement selector lever) for operation of switching the traveling direction of the tractor 10 between forward and backward. On the right side below the steering column cover 17, there is provided left and right brake pedals 52, 52 which constitutes a pair of left and right brake pedal devices configured to perform a braking operation of the tractor 10 by activating and deactivating not-shown left and right braking devices, respectively. A brake for braking the running tractor 10 is called a traveling brake. On the left side below the steering column cover 17, there is provided a clutch pedal 53 for operating a not-shown main clutch which connects and disconnects transmission of the drive force from the engine E.

The top surface of the floor 54 at the front of the driver sheet 20 is substantially entirely formed flat. On the floor 54 on the right side of the steering column cover 17, there is an accelerator pedal 55 configured to adjust the rotation number of the engine E.

On both left and right sides of the driver sheet 20, there are arm-rests 56 for a worker seated on the driver sheet 20 to place his/her elbows. The arm-rests 56 are each structured so that their positions are adjustable in the front, rear, up, and down directions. On the left side below the driver sheet 20, there is provided a PTO speed change lever 57 which is connected to the PTO transmission mechanism in the transmission case TM (see FIG. 1), and which is used for an operation of switching the rotation number of the PTO shaft 25.

On the right side at the front of the driver sheet 20, there is provided a main speed change lever 58 which is connected to the transmission mechanism in the transmission case TM (see FIG. 1), and which is used for accelerating and slowing down the traveling speed of the tractor 10 in a stepless manner. Further, adjacent to the main speed change lever 58, there is provided a sub speed change lever 59 for switching the transmission ratio of a travel sub transmission gear mechanism in the transmission case TM (see FIG. 1) between, for example, two modes of a high-speed and a low-speed.

Adjacent to the sub speed change lever 59, there is provided a PTO drive switch 60 which is connected to a not-shown PTO clutch and used when driving the PTO. The PTO drive switch 60 is configured to perform switching between an active state and inactive state of the PTO shaft 25 through operation of engagement and disengagement of the PTO clutch. That is, the PTO clutch is engaged while the PTO shaft 25 is in the active state, and the PTO shaft 25 rotates at the rotation number selected by the PTO speed change lever 57. On the other hand, the PTO shaft 25 is stopped while the PTO shaft 25 is in the inactive state. It should be noted that the PTO drive switch 60 is configured so that pressing and rotating the PTO drive switch 60 to right or left switches the PTO shaft 25 to the active state, and pressing the PTO drive switch 60 once during the active state switches the PTO shaft 25 to the inactive state. This is advantageous in terms of operability because the PTO shaft 25 can be instantaneously stopped by a simple operation.

It should be noted that, the present embodiment is structured so that the rotation of the PTO shaft 25 and the traveling of the tractor 10 simultaneously stops when the clutch pedal 53 is stepped in. However, it is possible to provide a not-shown switch configured to switch to an operation such that the rotation of the PTO shaft 25 does not stop even when the clutch pedal 53 is stepped in.

On the right side of one of the arm-rests 56, an operation panel 61 is provided. The operation panel 61 is a member where switches and the like for adjusting operation of the rotary tiller apparatus 30 are concentrated. For example, the operation panel 61 has a depth setting dial, a tilt setting dial, and the like.

Further, on the right side of the arm-rest 56, there is provided a hand brake lever 62 which maintains the tractor 10 in a braked-state. Such a brake that maintains the braked-state of the tractor 10 is called a parking brake.

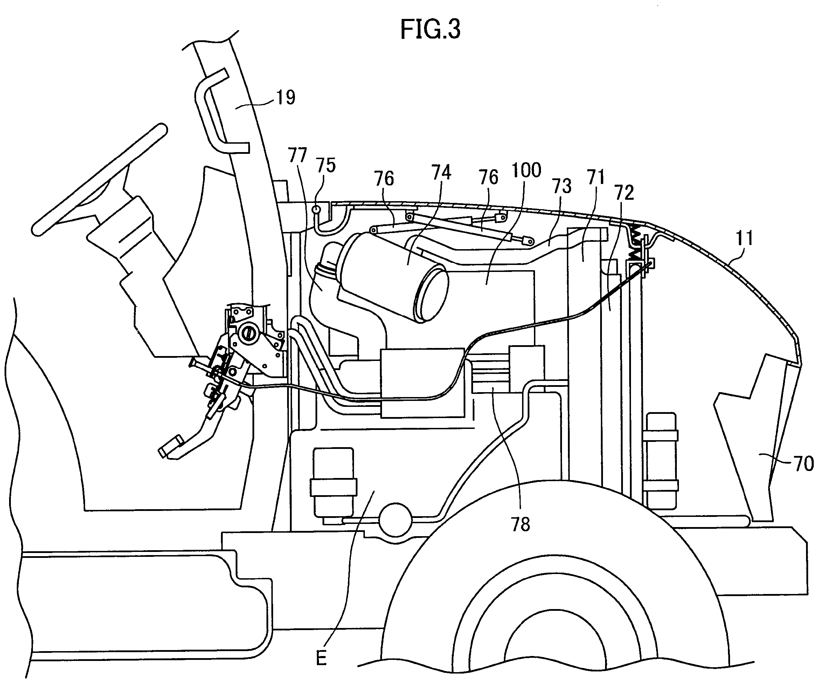

Next, the following details the structure inside the engine hood 11. FIG. 3 is a side view showing an example overview of a structure inside the engine hood 11. It should be noted that FIG. 3 partially omits illustration of the structure.

The engine hood 11 integrally has a latticed front grill 70 at a lower portion of its front surface. On the other hand, in front of the engine E, there is provided a shroud 71 which surrounds a cooling fan which rotates about a shaft extended in the front-rear direction of the tractor 10. In front of the shroud 71, the radiator 72 is provided. The above-described DPF 100 is provided above the engine E. As should be seen, in the structure inside the engine hood 11, external air (air) taken in through the front grill 70 is subjected to heat exchange with cooling water of the radiator 72, and is fed rearward to the engine E or the surrounding of the DPF 100 by the cooling fan. The engine hood 11 is structured so that the air is exhausted from between the engine hood 11 and the air cut plate, and the like.

In an upper portion of the shroud 71, there is provided an air intake pipe 73 extended in the front-rear direction of the shroud 71, which pipe has openings for taking in the air on the front side of the tractor 10. The upper portion of the shroud 71 has such a structure that the portion for arranging the air intake pipe 73 is notched, so that the upper portion of the shroud 71 and an upper portion of the air intake pipe 73 are substantially flush. The air intake pipe 73 is connected to the air cleaner 74. The air cleaner 74 is configured to purify and remove dust from the air taken in. An outlet port of the air cleaner 74 is connected to an air intake relay pipe 77. On the other hand, on the right side of the upper portion of the engine E, an intake manifold 78 is attached which supplies air by branching the air into each cylinder of the engine E. The air intake passage of the engine E is configured so that the air having passed the air cleaner 74 is supplied to each cylinder of the engine E through the intake manifold 78.

Between the air cleaner 74 and the intake manifold 78, it is preferable to provide a not-shown turbo supercharger and an Exhaust Gas Recirculation (EGR) device be provided. The turbo supercharger is a device that can yield a higher output by utilizing the kinetic energy of exhaust gas passing through the exhaust passage of the engine E, and compressing air on the side of the air intake passage and feeding the compressed air to the engine E. The EGR device mixes the exhaust gas partially with the air and re-feeding it to the engine E to burn it with a lower oxygen concentration, which lowers the maximum combustion temperature. This way, the EGR device can restrain generation of nitrogen oxides (NOx). When these members are provided, the air having passed the air cleaner 74 is introduced from the intake manifold 78 into each cylinder of the engine EGR, via the side of the air intake passage of the turbo supercharger and the EGR device.

On the other hand, the exhaust port of the engine E is connected to the above-mentioned DPF 100. It should be noted that the connection structure of the engine E and the DPF 100 is described later.

In the upper portion of the rear end of the engine hood 11, a hinge 75 is attached which rotates with the above-mentioned opening/closing shaft of the tractor 10 as the fulcrum. The engine hood 11 is structured so that its front side largely opens upward with the opening/closing shaft in the rear portion as the fulcrum. It should be noted that the engine hood 11 is not limited to the structure in which its front side opens, and may adopt a structure such as one that the rear side opens, or one in which left and right side plates separable from a top board open sideways, respectively.

For example, in the upper portion rearward of the engine hood 11, two gas springs 76, 76 are attached which are connected to the machine body. The gas springs 76, 76 each has a high-pressure air such as nitrogen gas sealed therein. The gas springs 76, 76 are members which assist opening and closing of the heavy engine hood 11 by a gas reaction force, maintain an open state of the engine hood 11 at a predetermined position, damp the impact at a time of fully opening or fully closing the engine hood 11. The larger the tractor 10 becomes, the more the effects of the gas springs 76, 76 are exerted. As the gas springs 76, 76, it is preferable to adopt a type that stops at any position.

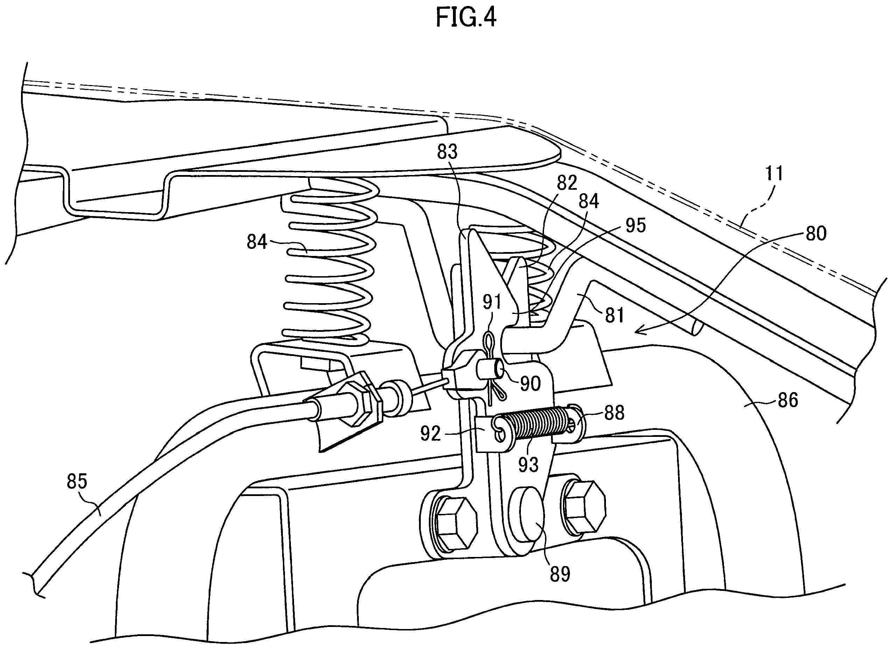

Next, the following details a lock mechanism of the engine hood 11. FIG. 4 is a perspective view showing an example lock mechanism 80 for the engine hood 11.

The lock mechanism 80 has a function of holding the engine hood 11 in a state of housing the engine E and the like placed on the machine body (on the chassis 12). The lock mechanism 80 is provided inside the engine hood 11, on one side of the front-rear direction of the machine body. Since the present embodiment deals with a case where the front side of the engine hood 11 opens, the lock mechanism 80 is also positioned on the front side. The lock mechanism 80 includes: a lock bar 81, a fitting member 82, a lock catch 83, and pop-up springs 84, 84 as elastic members. Further, to operate the lock mechanism 80 from a distanced position, a wire 85 serving as a dynamic force transmission member is connected to the lock mechanism 80. It should be noted that the wire 85 is structured by a linearly extending metal wire, whose outer circumference is covered by a cylindrical hollow outer wire made of a spiral-shaped steel wire, vinyl, and the like.

The lock bar 81 may be attached to any one of the machine body and the engine hood 11. In the example of FIG. 4, the lock bar 81 is attached to the engine hood 11. The rod-like lock bar 81 is bent to have a substantially U-shape as viewed from a side, and portions on both ends thereof extended in the front-rear directions are fixed to the engine hood 11 by welding and the like. The bent lower end of the U-shape extends substantially horizontally in the front-rear direction when the engine hood 11 is closed.

The fitting member 82 may be attached to any one of the machine body and the engine hood 11. In the example of FIG. 4, the fitting member 82 is attached to the machine body. For example, the fitting member 82 is fixed by a bolt and the like to an upper portion of a front frame 86 in a substantially gate-like shape as viewed from the front, for attaching the above-mentioned radiator 72 on the back surface side.

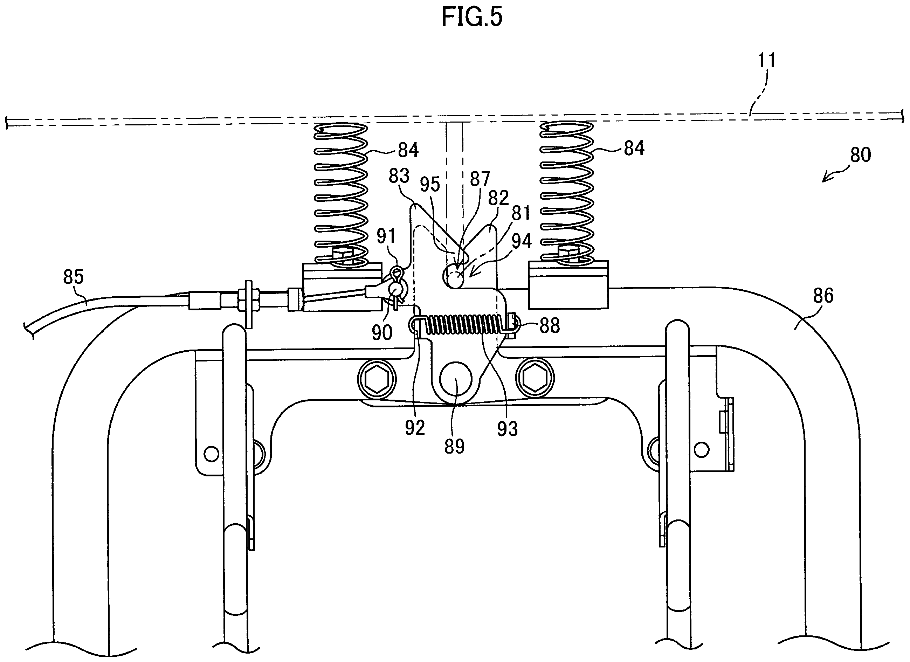

The fitting member 82 is a flat plate formed in a substantially M-shape as viewed from the front. The fitting member 82 extended in the up-down direction in a flat-plate form is perpendicular to the lock bar 81 which extends substantially horizontally in the front-rear direction. The fitting member 82 has a notch 87 that serve as a fitting portion for the lock bar 81 (see later mentioned FIG. 5). More specifically, the notch 87 in a substantially U-shape extends downward from a middle portion of the substantially M-shape as viewed from the front (i.e., relative to the left/right direction) of the fitting member 82. The width of the notch 87 as viewed from the front has a dimension that is equal to or greater than the diameter of the lock bar 81. The fitting member 82 has a spring attaching portion 88 below the lower end of the notch 87. The spring attaching portions 88 exemplified in FIG. 4 protrudes forward from the left end (right end as viewed from the front) and has a hole perforated in the left/right direction.

The lock catch 83 may be attached to any one of the machine body and the engine hood 11. In the example of FIG. 4, the lock catch 83 is attached to the machine body. For example, the lock catch 83 is a flat plate which overlaps the front surface of the fitting member 82. In the example of FIG. 4, the lock catch 83 has an N-like-shape turned 90 degrees, as viewed from the front; however, the shape of the lock catch 83 is not limited to this.

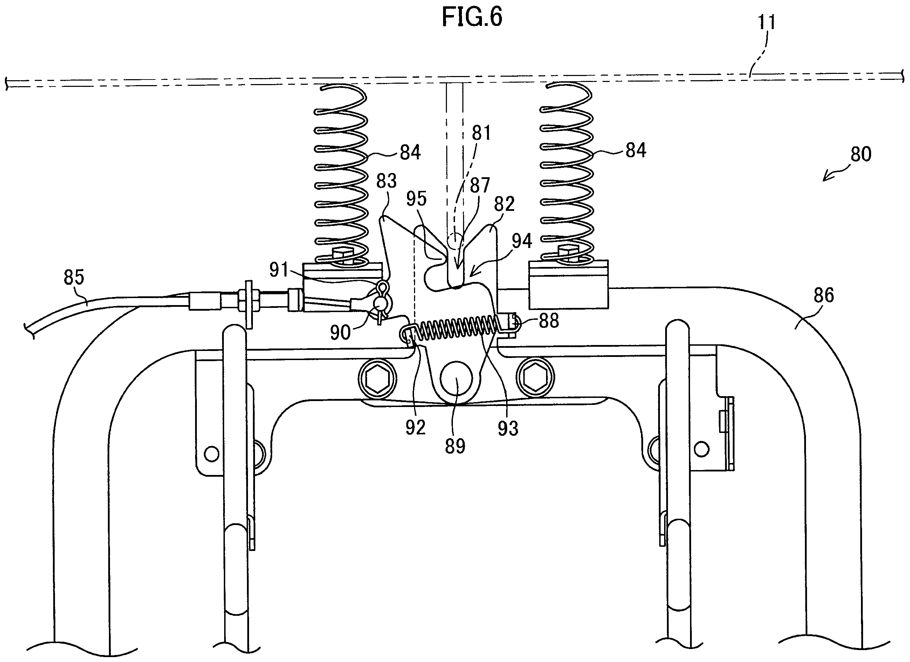

FIG. 5 is a front elevational view showing an example state in which the lock catch 83 of the lock mechanism 80 is not rotated. On the other hand, FIG. 6 is a front elevational view showing an example state in which the lock catch 83 of the lock mechanism 80 is rotated. The lock catch 83 is provided in such a manner that its back surface is able to rotate in directions it slides with respect to the front surface of the fitting member 82. Therefore, a through hole is formed at the lower portions of the fitting member 82 and the lock catch 83, and for example, the lock catch 83 is attached to the fitting member 82 and made rotatable by a rotating pin 89.

The lock catch 83 has the wire 85 attached in a position opposite to the spring attaching portion 88 of the fitting member 82, relative to the left and right directions. The lock catch 83 is structured to be rotatable about the rotating pin 89 as the axis, when the wire 85 is pulled (see FIG. 6). More specifically, a hole is formed on the right end (left end as viewed from the front) of the lock catch 83 exemplified in FIG. 4 and the like. To that hole of the lock catch 83 and a hole at a leading end part of the wire 85 (wire terminal) formed in a ring-shape, a hinge pin 90 is inserted and is retained by a split pin 91.

The lock catch 83 has a spring attaching portion 92 in a position opposite to the spring attaching portion 88 of the fitting member 82, relative to the left and right directions, but substantially the same relative to the up-down direction. The spring attaching portions 92 exemplified in FIG. 4 and the like protrudes forward from the right end (left end as viewed from the front) and has a hole perforated in the left/right direction. Between the hole on the spring attaching portion 88 and the hole on the spring attaching portion 92, a spring 93 is attached. The spring 93 biases the lock catch 83 in a direction of pulling the wire 85. The type of the spring 93 is not particularly limited provided that it can bias the lock catch 83. In the example of FIG. 4, a pull coil spring is used.

The lock catch 83 has a notch 94 in a substantially C-shape which extends horizontally relative to a left/right direction, towards the side where the wire 85 is attached. The lower end of the notch 94 is substantially the same as or slightly lower than the lower end of the notch 87 of the fitting member 82. That is, the notch 94 is formed so as to correspond to the notch 87, matching with the portion of the fitting member 82 where the lock bar 81 is fit as viewed from the front. The width of the notch 94 as viewed from the front is larger than the diameter of the lock bar 81.

The lock catch 83 has a hook portion 95 that rotates according to movement of the wire 85. More specifically, the hook portion 95 is formed above the notch 94, from the side of attaching the wire 85 towards opposite direction relative to the left and right directions. When the wire 85 is most tensioned by the biasing force of the spring 93, a through hole is formed as viewed from the front by the notch 87 of the fitting member 82 and the notch 94 of the lock catch 83. This through hole is the position where the lock bar 81 fits in. The lock bar 81 in the through hole is locked by the hook portion 95 (see FIG. 5).

On the other hand, the hook portion 95 is structured so as to rotate against the biasing force of the spring 93, when the lock bar 81 is pressed in from the above. To this end, the hook portion 95 has its upper side declined downward towards the protruding end, as viewed from the front. The hook portion 95 may have a structure such that its lower side extends substantially horizontally, and its upper side is tilted downward towards the protruding end. Further, the protruding end connecting the upper side and the lower side is preferably chamfered so the lock bar 81 of the hook portion 95 smoothly slide.

The pop-up springs 84, 84 are attached between the machine body and the engine hood 11 biases the engine hood 11 in the direction of opening. The pop-up springs 84, 84 may have a biasing force that lifts the lock bar 81 above the hook portion 95, while the lock bar 81 is not locked by the hook portion 95. The pop-up springs 84, 84 may be attached either one of the machine body and the engine hood 11; however, the pop-up springs 84, 84 are attached to the machine body in the example of FIG. 4.

For example, the pop-up springs 84, 84 are attached to the upper end of the front frame 86, aligned in the left/right direction. The pop-up springs 84, 84 are each structured by, for example, a compression coil spring and are arranged for biasing in the up-down directions. The pop-up springs 84, 84 are preferably arranged symmetrically on left and right, in terms of balancing at opening and closing of the engine hood 11 and restraining rattling of the engine hood 11. It should be noted that, in cases where a pop-up spring 84 is also arranged in the middle relative to the left/right directions, the number of pop-up springs 84, 84 may be an odd number.

When the engine hood 11 is closed with such a lock mechanism 80, the engine hood 11 and the pop-up springs 84, 84 abut each other to absorb impact, before the lock bar 81 abuts the hook portion 95 so as to damp the impact. When the engine hood 11 is closed against the biasing force of the pop-up springs 84, 84, the lock bar 81 is pressed downward along the sloped surface on the upper side of the hook portion 95, thus rotating the hook portion 95 against the biasing force of the spring 93. The lock bar 81 having passed the hook portion 95 reaches the fitting portion of the fitting member 82, and locked by the hook portion 95 (see FIG. 5).

On the other hand, when the engine hood 11 is opened, the hook portion 95 moves against the biasing force of the spring 93 according to the movement of the wire 85. Then, the biasing force of the pop-up springs 84, 84 lifts the lock bar 81 above the hook portion 95 (see FIG. 6). This way, the engine hood 11 is also lifted by a predetermined amount that allows, for example, inserting of a hand of a worker between the machine body and the engine hood 11. From this state, the engine hood 11 is opened by the worker. Since the gas springs 76, 76 (see FIG. 3) are attached between the machine body and the engine hood 11, the engine hood 11 can be opened and closed with a light force, and the engine hood 11 can be stopped at any open angle.

As described, the lock mechanism 80 of the tractor 10 is structured so as to lock the engine hood 11, while the engine hood 11 is closed against the biasing force of the pop-up springs 84, 84 and the lock bar 81 is positioned below the hook portion 95. Further, the lock mechanism 80 of the tractor 10 is structured so that the engine hood 11 is openable while the lock bar 81 is positioned above the hook portion 95. Therefore, it is possible to provide a tractor 10 having the lock mechanism 80 of the engine hood 11 which is excellent in workability.

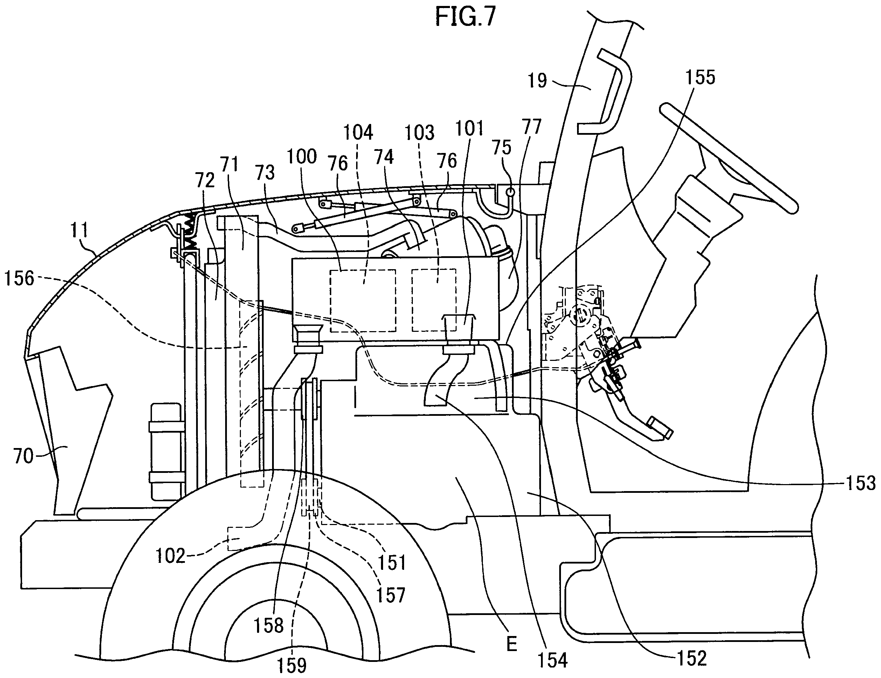

Next, the following details the engine E and the DPF 100 serving as an exhaust processing device which are accommodated in the engine hood 11. FIG. 7 is a side view showing an example overview of a structure of the engine E and the DPF 100 inside an engine hood 11.

The engine E includes a cylinder block 152 having therein a crank shaft 151 (output shaft) and a plurality of pistons. The crank shaft 151 extends in the front-back direction of the engine E, and is rotatably attached to the cylinder block 152. Both front and rear ends of the crank shaft 151 protrude from front and rear ends of the cylinder block 152, respectively. It should be noted that the engine E is placed on the chassis 12 (see FIG. 1) so that the crank shaft 151 extends in the front-rear direction of the tractor 10.

Above the cylinder block 152, a cylinder head 153 is mounted with a not-shown head gasket therebetween. The above-mentioned intake manifold 78 is arranged on the right side surface of the cylinder head 153 (see FIG. 3). On the other hand, on the left side surface of the cylinder head 153, an exhaust manifold 154 is arranged. Therefore, the exhaust manifold 154 and the intake manifold 78 are arranged on left and right side surfaces of the engine E, respectively. It should be noted that the top surface of the cylinder head 153 is covered by a cylinder head cover 155.

The cooling fan 156 is provided on the front surface side of the cylinder block 152. On the front surface side of the cylinder block 152, a crank shaft pulley 157 and a cooling fan pulley 158 are attached to the crank shaft 151 and the rotation shaft of the cooling fan 156, respectively. Between the crank shaft pulley 157 and the cooling fan pulley 158, for example, a cooling fan V-belt 159 for transmitting a drive force of the crank shaft 151 is provided. This way, the rotational drive force is transmitted to the cooling fan 156. As described above, external air taken into inside of the engine hood 11 through the front grill 70 by the cooling fan 156 passes the radiator 72, and is then fed to the engine E and the DPF 100 behind.

The exhaust manifold 154 collects exhaust gas generated in each cylinder of the engine E. An exhaust passage of the engine E is structured so as to introduced the exhaust gas having passed the exhaust manifold 154 into the DPF 100.

Between the exhaust manifold 154 and the DPF 100, the above described not-shown turbo supercharger and the EGR device may be provided. The turbo supercharger is structured so that its turbine on the side of the exhaust passage is rotated by the exhaust gas, and for example a centrifugal compressor is driven with the rotational force to compress the air on the side of the intake passage. The EGR device connects the exhaust manifold 154 and the intake manifold 78 via an EGR cooler for cooling the exhaust gas, and includes a valve for adjusting the amount of exhaust gas supplied. In a structure including these members, the exhaust gas having passed the exhaust manifold 154 is branched into any of the DPF 100 and intake manifold 78, through the side of the exhaust passage of the turbo supercharger and the EGR device.

A purification inlet port pipe 101 connected to the exhaust downstream side of the exhaust manifold 154 is connected to the DPF 100. Exhaust gas from each cylinder of the engine E is emitted outside, via the DPF 100 through the exhaust pipe 102 connected to the outlet side of the DPF 100. The DPF 100 filters and collects particulate matter (PM) such as sooth (hydrocarbon) contained in the exhaust gas, and purifies the exhaust gas by burning and removing the collected particulate matter, with a use of an oxidation catalyst.

The DPF 100 has a substantially cylindrical shape, and is made of a refractory metal. The DPF 100 is attached to the top of the engine E so that its axial direction is parallel to the crank shaft 151 of the engine E. The DPF 100 has a structure such that a substantially cylindrical filter case accommodated therein via an insulating material such as glass wool, and for example, a diesel oxidation catalyst 103 of platinum and the like, and a soot filter 104 are serially aligned in this order from the upstream side of the flow direction of the exhaust gas, in the filter case. It should be noted that the exhaust gas flows from the rear side to the front side of the tractor 10 in the DPF 100. As described, by setting the flow direction of the exhaust gas in the DPF 100 and the direction of the output shaft of the engine E parallel to each other, the small space in the engine hood 11 can be efficiently used.

Further, the DPF 100 is attached on the side of the exhaust manifold 154 relative to the left/right direction of the engine E. In such an arrangement having the DPF 100 and the exhaust manifold 154 close to each other, high temperature exhaust gas can be always introduced to the DPF 100, and a good exhaust gas purification performance can be maintained.

The diesel oxidation catalyst 103 acts on the nitrogen monoxide (NO) contained in the exhaust gas and oxides the same to unstable nitrogen dioxide (NO₂), when the temperature of the exhaust gas exceeds a renewable temperature (e.g., approximately 300 degrees). The soot filter 104 has a honeycomb structure having a plurality of cells partitioned by a porous partition walls capable of filtering particulate matters. It should be noted that the DPF 100 may have a structure in which the soot filter 104 itself holds an oxidation catalyst.

When passing of the exhaust gas through the DPF 100 continues, the particulate matter is deposited on the soot filter 104. It should be noted that the status of deposition of the particulate matter is detectable based on a differential pressure between the upstream and downstream of the soot filter 104. By oxidizing and removing the particulate matter deposited on the soot filter 104, in the form of the above-mentioned unstable NO₂, the soot filter 104 is renewed and the performance of the soot filter 104 for collecting the particulate matter is recovered. Therefore, the DPF 100 becomes a very high temperature, because high-temperature exhaust gas is introduced to the soot filter 104 or the soot filter 104 itself is heated for renewing the soot filter 104. Further, the DPF 100 becomes a high temperature, also when the particulate matter deposited on the soot filter 104 is rapidly burned.

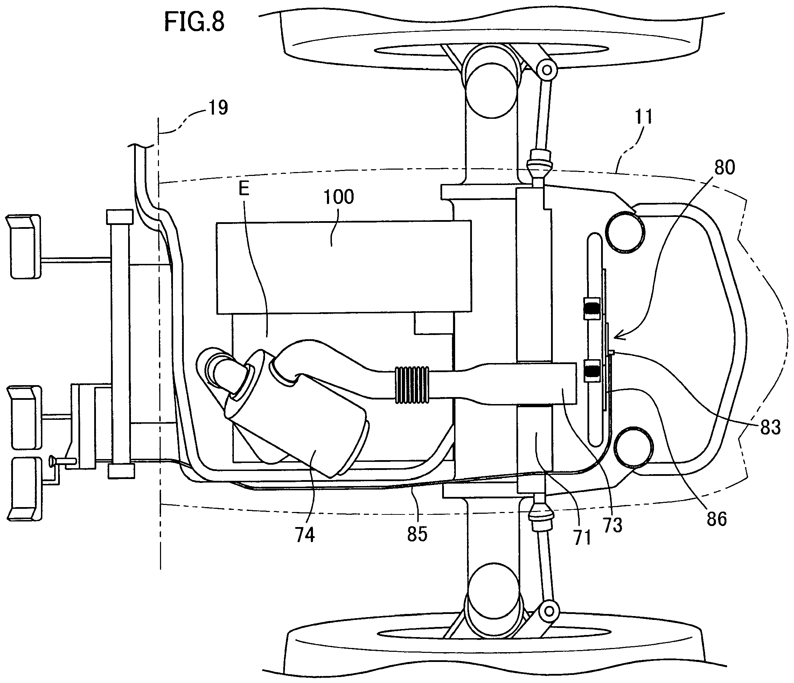

FIG. 8 is a plan view showing an example overview of a structure inside the engine hood 11. As hereinabove mentioned, the high-temperature DPF 100 that could be a thermal resource, in particular, is above the engine E and is accommodated in the engine hood 11, on slightly left or right side of the machine body. The DPF 100 exemplified in FIG. 8 is arranged on the left side of the tractor 10, in such a manner that its cylindrical axis extends in the front-rear direction.

On the other hand, on the right side of the tractor 10, the air intake pipe 73 and the air cleaner 74 are arranged in such a manner as to avoid the middle of the tractor 10 relative to the left/right direction. Further, as hereinabove mentioned, the upper portion of the air intake pipe 73 is formed to be substantially flush with the upper portion of the shroud 71. With the arrangement, the tractor 10 houses the parts efficiently in a small space, with a particularly small width relative to the left/right direction, and prevents a shape of the engine hood 11 with an upwardly protruding middle relative to the left/right direction. This provides broader visibility from the driver sheet 20 particularly in the direction towards the ground, and improves the operability while driving.

In the area of the engine hood 11, the wire 85 connected to the lock catch 83 of the above-mentioned lock mechanism 80 is arranged on the opposite side to the DPF 100 relative to the left and right of the machine body. In the example of FIG. 8, the wire 85 is arranged on the right side which is the opposite side to the DPF 100 arranged on the left side, in the area of the engine hood 11.

The wire 85 is stretched from the lock catch 83 positioned in the front portion of the engine hood 11 to the right end of the area of the engine hood 11 along the front frame 86. From there, the wire 85 is stretched to the rear end of the area of the engine hood 11 along the right end of the area of the engine hood 11. In the upper portion at the right end of the shroud 71, there may be formed a through hole in the front-rear direction, and the wire 85 may pass through this through hole.

As described, in the area of the engine hood 11, the wire 85 is stretched along the right end in such a manner as to be distanced as much as possible from the DPF 100 on the left side of the machine body. This keeps the wire 85 hardly affected by the DPF 100 that generates a very high temperature, and avoids unnecessary deterioration of the durability. It should be noted that the wire 85 is introduced to a position nearby the brake pedal device in the cabin 19, from the rear end of the area of the engine hood 11.

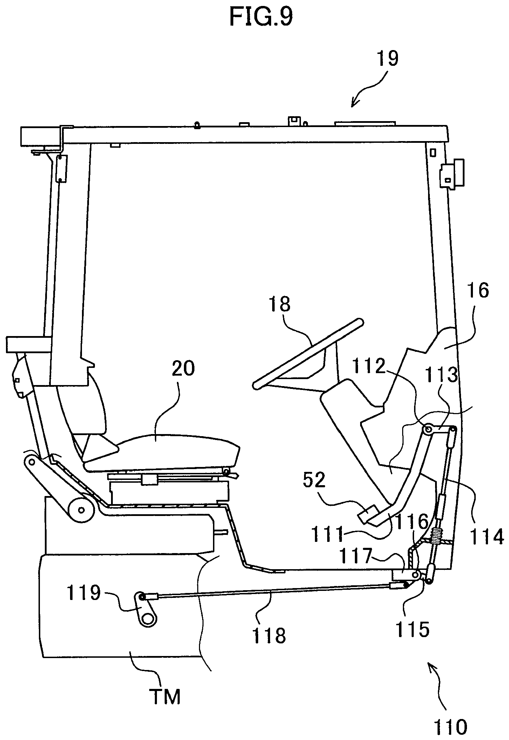

Next, the following details the connection structure of the brake pedal device. FIG. 9 is side view showing an example overview of a connection structure of the brake pedal device 110. The brake pedal device 110 is for performing braking operation to an axle of the rear wheels 14, 14 (see FIG. 1). The tractor 10 is structured so that a braking device inside a not-shown rear axle casing activates, when the brake pedal device 110 is operated. Left and right brake pedals 52, 52 constituting the brake pedal device 110 are linked to left and right braking devices, respectively. It should be noted that the connection structure of the left side and the right side of the left and right brake pedal 52, 52 are the same as viewed from a side. Therefore, the following collectively details the left and right brake pedals 52, 52, as a connection structure of the brake pedal device 110.

The tractor 10 has the brake pedal device 110 for activating and deactivating the braking device, below the dashboard 16 on the front side of the cabin 19. The brake pedal device 110 has an arm (brake arm 111) extended below the dashboard 16 in such a manner as to bend rearward of the machine body, which rotates with respect to the machine body. The brake arm 111 has its one end attached to the rotation shaft 112 extended in the left/right direction within the area of the dashboard 16, and is structured to be rotatable in the front-rear direction of the machine body, with the rotation shaft 112 as the fulcrum. On the other hand, the other end of the brake arm 111 is provided with the brake pedal 52 to be stepped on by an operator. The tractor 10 is structured so that the stepping on the brake pedal 52 rotates the brake arm 111.

On the one end of the brake arm 111, a plate 113 extended forward of the machine body is fixed. The plate 113 is structured to rotate with rotation of the brake arm 111. The front end of the plate 113 is rotatably connected to an upper end of a longitudinal connecting rod 114 which penetrates the floor surface of the cabin 19 and extends in the up-down direction below the floor surface. The connection structure of the plate 113 and the longitudinal connecting rod 114 is for converting the rotation of the brake arm 111 in the front-rear directions into the rotation in the up-down directions.

To the lower end of the longitudinal connecting rod 114, one end of an L-shaped link 115 bend in a shape of L is rotatably connected. To the bottom surface of the cabin 19, an L-shaped link support portion 117 is fixed which rotatably supports a middle portion of the L-shaped link 115 as a link rotation shaft 116. Another end of the L-shaped link 115 is rotatably connected to the front end of a horizontal connecting rod 118 extended in the front-rear directions. This way, the connection structure of the longitudinal connecting rod 114, the L-shaped link 115, and the horizontal connecting rod 118 is converts the movement of the longitudinal connecting rod 114 in the up-down directions into movement in the front-rear directions.

To the rear end of the horizontal connecting rod 118, the leading end of a brake operating lever 119 is rotatably connected. The brake operating lever 119 is provided to the transmission case TM, and is structured to rotate for activating and deactivating the braking device. In the tractor 10 with the above described connection structure, the braking device activates when the brake pedal 52 is stepped on.

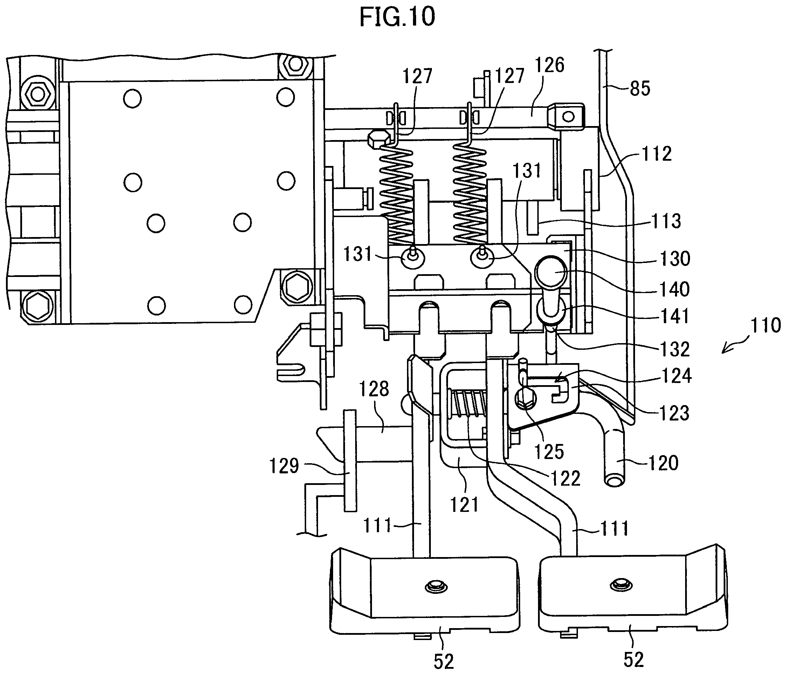

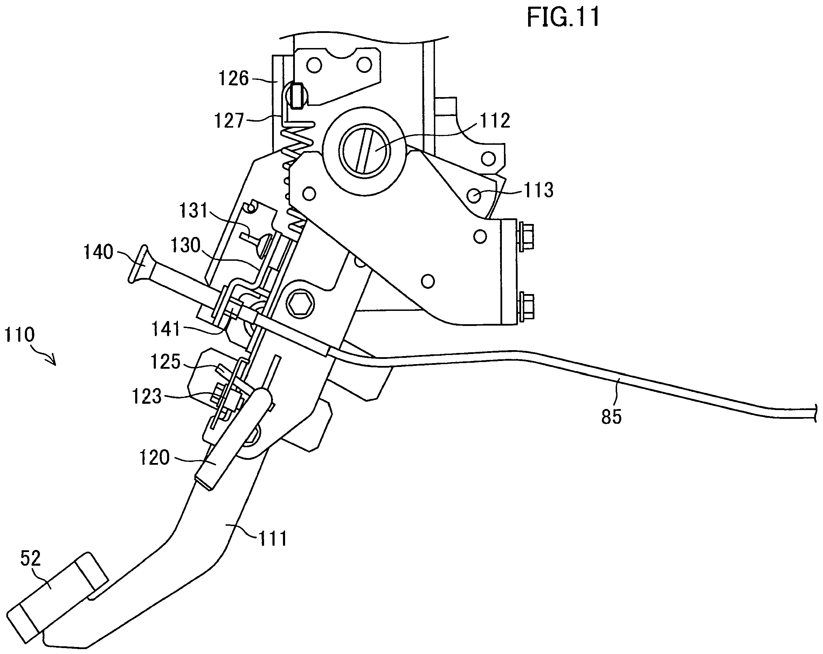

Next, the following details the attachment structure of the wire 85 introduced from the engine hood 11 into the cabin 19. FIG. 10 is a front elevational view showing an example of the brake pedal device 110. FIG. 11 is a side view showing the example of the brake pedal device 110. It should be noted that, in this example, a view point from a side of the driver sheet 20 (see FIG. 2) is referred to as the front surface.

As hereinabove described, the brake arm 111 to which the brake pedal 52 is attached to its leading end is structured to be rotatable in the front-rear directions (a side far from the viewer in a direction from the viewer towards the sheet of FIG. 10 (hereinafter, viewer's far side) and a side close to the viewer (hereinafter, viewer side)) with the rotation shaft 112 as the fulcrum. In midway portion of each of the left and right brake arms 111, 111, there is a hole penetrating in the left/right direction. Through this hole, a connecting rod 120 serving as a connection member connecting the left and right brake arms 111, 111 is detachably provided. For example, the connecting rod 120 is inserted while traveling, and is pulled out during work. The connecting rod 120 exemplified in FIG. 10 and the like has one end side inserted from the side of the right brake arm 111 to the left brake arm 111, and the other end side is bent downwards, and toward the rear side (viewer side on FIG. 10) where the driver sheet 20 (see FIG. 2) is provided. As described, the bent portion on the other end of the connecting rod 120 serves as a holding part which contributes to a good operability.

To the right brake arm 111, a spring storage strut 121 is attached which has a substantially C-shape towards the side of the left brake arm 111 with portions above and below the position of inserting the connecting rod 120 as the base points. A compression coil spring 122 is attached on the outer circumference of a portion of the connecting rod 120, which portion is between the right brake arm 111 and the spring storage strut 121 while the left and right brake arms 111, 111 are linked by the connecting rod 120. In this state, the connecting rod 120 is biased towards the side of the left brake arm 111 by the compression coil spring 122.

Meanwhile, on the right side of the right brake arm 111, a connecting rod guide plate 123 is attached. To this connecting rod guide plate 123, a guide groove 124 in a substantially J-shape as viewed from the front is formed. To the connecting rod 120, a guide pin 125 to be inserted into the guide groove 124 is attached. While the connecting rod 120 is pulled out to the right side in the above structure, rotating the holding part upward (towards viewer side on FIG. 10) links the left and right brake pedal devices 110. Rotating the holding part downward (towards viewer's far side on FIG. 10) release the link of the left and right brake pedal device 110.

Above the rotation shaft 112, a spring attaching strut 126 extended in left/right direction is provided. Between the spring attaching strut 126 and the left and right brake arms 111, 111, tension coil springs 127, 127 which bias the left and right brake arms 111, 111 rearward (viewer side on FIG. 10) are attached. When the operator stops stepping in the brake pedal 52, in the structure, the brake arm 111 rotates (returns) rearwards.

In a midway portion of the left brake arm 111, a brake fixing strut 128 extended towards left is attached. On the other hand, a brake arm stopping member 129 which engages with the brake fixing strut 128 is provided in a position along a rotation track of the brake fixing strut 128. The brake arm stopping member 129 has a plurality of saw-teeth-like protrusions and dents in a position where the brake fixing strut 128 is engaged when the left brake arm 111 rotates a predetermined angle or more.

Therefore, the brake pedal device 110 is structured so that, when the left brake pedal 52 is stepped in by a predetermined amount, the brake fixing strut 128 and the protrusions and dents of the brake arm stopping member 129 engage with each other, thus maintaining the state where the left brake pedal 52 is stepped in. In other words, the brake pedal device 110 is structured so as to allow a state in which a parking brake that maintains the braked-state of the tractor 10 is made active, by the brake fixing strut 128 and the brake arm stopping member 129.

The brake arm stopping member 129 does not have the protrusions and dents in its position to meet the brake fixing strut 128, when the left brake pedal 52 is further stepped in from the state where the parking brake is functioning. Therefore, the brake pedal device 110 has a structure such that, when the left brake pedal 52 is again stepped in from the state where the parking brake is functioning, the engagement of the brake fixing strut 128 with the protrusions and dents on the brake arm stopping member 129 is released.

As hereinabove described, the tension coil spring 127 is attached to the left brake arm 111. The brake pedal device 110 has a structure such that, when the left brake pedal 52 is again stepped in from the state where the parking brake is functioning, the brake arm 111 rotates rearward (to the viewer side on FIG. 10) thus releasing the parking brake.

As described, the tractor 10 is structured so that the parking brake is maintained in an active state by the stepping-in operation of one brake pedal device 110 out of a pair of left and right brake pedal devices 110. In the example of FIG. 10, the structure of activating and deactivating the parking brake is provided to the left brake pedal 52. Further, as hereinabove described, the tractor 10 has a structure such that the left and right brake pedal devices 110 are linked by a connecting rod 120. Therefore, while the left and right brake pedal devices 110 are linked, the parking brake is maintained active not only by the stepping-in operation of the left brake pedal 52, but also by a stepping-in operation of the right brake pedal 52.

On the rear side (viewer side on FIG. 10) of the left and right brake arms 111, 111, a brake detection switch attaching strut 130 extended in the left/right direction is provided. The brake detection switch attaching strut 130, as viewed from a side, is parallel to the brake arm 111 in the state of being rotated rearward (towards viewer side on FIG. 10). There is a space between the left and right brake arms 111, 111 and the brake detection switch attaching strut 130, as viewed from a side. The brake detection switch attaching strut 130 is provided, in that space, with left and right brake detection switches 131, 131 configured to detect contact of the left and right brake arms 111, 111, respectively. As described, the left and right brake detection switches 131, 131 are configured to detect whether or not the left and right brake pedals 52, 52 are stepped in, respectively.

The brake detection switch attaching strut 130, as viewed from the front, is provided with a notch 132 in a position that does not overlap the left and right brake arms 111, 111. The notch 132 as viewed from the front, which is exemplified in FIG. 10, is positioned on the right side, and below the left and right brake detection switches 131, 131. The notch 132 is formed in a substantially U-shape, and is notched upward from the lower end of the brake detection switch attaching strut 130.

In a suitable position in the cabin 19 such as the notch 132 for example, an operation lever 140 constituting an operation unit for releasing the lock of the lock mechanism 80 is attached. That is, the tractor 10 is structured so that, between the lock mechanism 80 and the operation lever 140, the wire 85 transmits an operation of the operation lever 140 to the lock mechanism 80.

More specifically, as exemplified in FIG. 10 and the like, the outer wire 141 of the wire 85 introduced from the rear end of the area of the engine hood 11 into the cabin 19 is fixed to the notch 132. It should be noted that the inner wire of the wire 85 is connected to the operation lever 140. The operation lever 140 is attached so as to extend rearward from the brake detection switch attaching strut 130 (see FIG. 11). Further, the operation lever 140 can be pulled rearward. The position of attaching the operation lever 140 is preferably a position that does not hinder other work and yet provides a good operability.

Next, the following details a releasing method of the lock mechanism 80 of the engine hood 11. First, the operation lever 140 is pulled rearward by the operator. The operation of the operation lever 140 is transmitted by the wire 85 to the lock catch 83 of the lock mechanism 80. By pulling the operation lever 140 against the spring 93, the lock catch 83 rotates, and the lock bar 81 locked by the hook portion 95 is lifted above the hook portion 95 by the biasing force exerted by the pop-up springs 84, 84. In short, the engine hood 11 is lifted by the above operation. It should be noted that, the operation of the operation lever 140 by a hand does not fully open the engine hood 11. After the above operation, the engine hood 11 is opened by the operator.

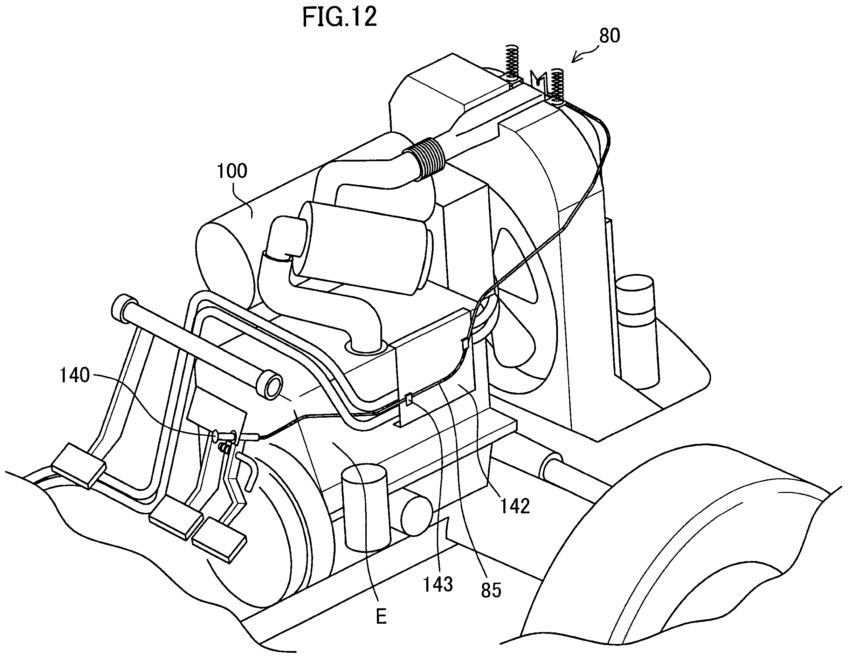

FIG. 12 is a perspective view of the tractor 10 showing an example arrangement of the wire 85. FIG. 12 omits illustration of the engine hood 11 and the cabin 19.

As shown in FIG. 12, in the tractor 10 of the present embodiment, the operation lever 140 for operating the lock mechanism 80 of the engine hood 11 is arranged in the cabin 19. This structure meets the regulation for obtaining homologation in Europe. That is, the tractor 10 can eliminate a need for a key or a cover as a further releasing mechanism requiring another tool, for the operating lever 140. Further, the tractor 10 can reduce the number of parts. Further, the tractor 10 allows a one-touch operation for releasing the lock mechanism 80, which is favorable in terms of operability.

Further, in the tractor 10 of the present embodiment, the wire 85 connecting the lock mechanism 80 and the operation lever 140 is arranged on the opposite side of the DPF 100 which is a high-heat source. This structure can reduce an influence of the heat to the wire 85. It should be noted that the wire 85 in the engine hood 11 may be fixed by a clamp 143 and the like to a fix plate 142 having a rectangular shape as viewed from a side, which is on the right side of the engine E and which is for fixing a fuel hose, and a hose of an air conditioner.

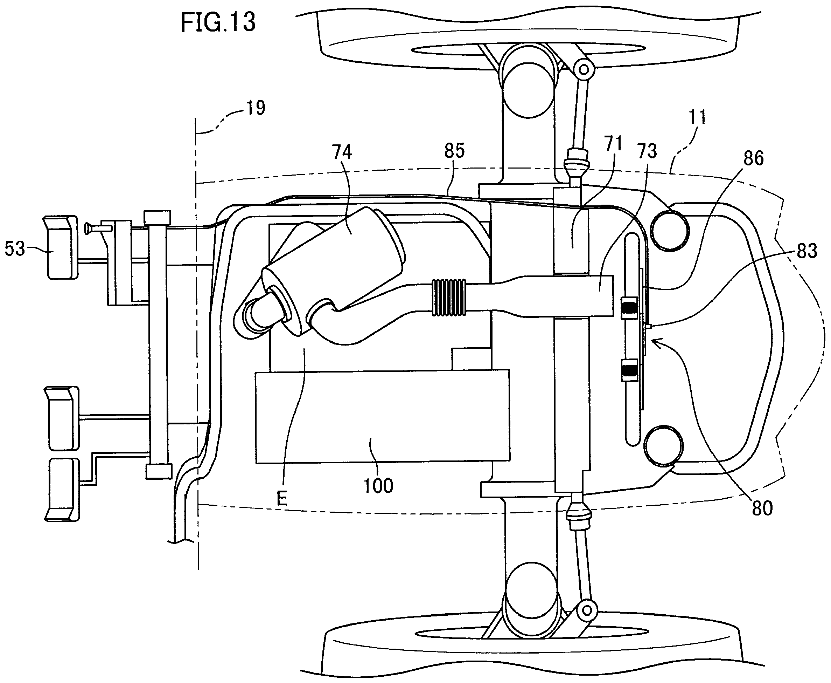

FIG. 13 is a plan view showing an overview of structure inside an engine hood 11 related to a modification of the tractor 10. In the modification of the tractor 10, the DPF 100 is arranged on the right side in the engine hood 11.

In such a structure, the wire 85 may be arranged on the left side. The wire 85 in this case is introduced from the rear end of the area of the engine hood 11 into the cabin 19, nearby a clutch pedal 53. Although detailed illustration is omitted, the wire 85 may be attached to a clutch detection switch attaching strut, in a similar manner to the above-mentioned embodiment.

As hereinabove described, the present embodiment provides a tractor 10 including an engine hood 11 configured to be openable and closable with respect to a machine body, which covers and houses a DPF 100 on one side of the machine body relative to a left/right direction, and a cabin 19 positioned rearward of the engine hood 11, including: a lock mechanism 80 configured to lock the engine hood 11; an operation lever 140 configured to unlock the lock mechanism 80; and a wire 85 configured to transmit operation of the operation lever 140 to the lock mechanism 80, between the lock mechanism 80 and the operation lever 140, wherein the lock mechanism 80 is disposed in the engine hood 11, on one side of the front-rear direction of the machine body, and the operation lever 140 is disposed in the cabin 19. Thus, there is provided a tractor 10 having a lock mechanism 80 for the engine hood 11, which is excellent in workability in a situation requiring unlocking. Further, by arranging the wire 85 on the opposite side of the DPF 100 relative to the left and right of the machine body, an influence of the heat can be restrained.

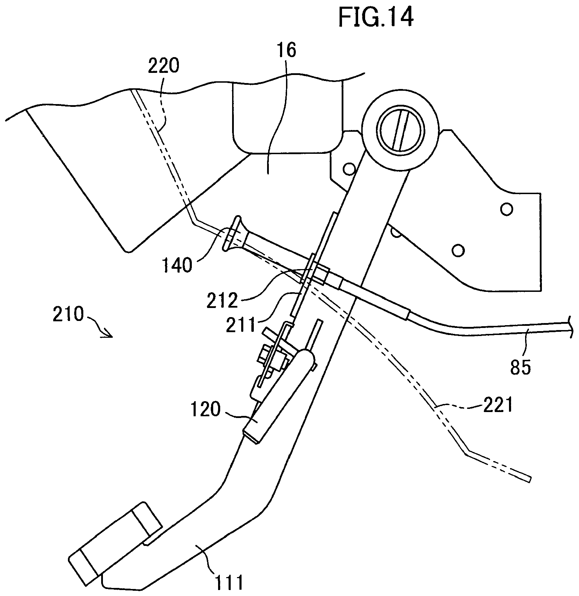

Next, the following details a tractor 10 related to another embodiment. FIG. 14 is a side view showing an example brake pedal device 210 related to the other embodiment. The tractor 10 of the other embodiment is different in the position of attaching the operation lever 140. It should be noted that structures identical to the above-mentioned embodiment are given the same reference symbols, and description for the structures is omitted as needed.

To a midway portion of the right brake arm 111 of the brake pedal device 210, an operation lever attaching strut 211 extended towards right is attached. In the example of FIG. 14, a notch 212 is formed from the right end of the operation lever attaching strut 211 towards left. In the tractor 10 of the other embodiment, the operation lever 140 constituting the operation unit for unlocking the lock mechanism 80 is attached to this notch 212 With this structure, the operation lever 140 attached to the right brake arm 111 rotates along with rotation of the right brake arm 111.

As hereinabove described, the brake pedal device 210 includes a pair of left and right brake pedal devices 210, 210 associated with the left and right brake devices, and further includes a connecting rod 120 (see FIG. 10 and the like) which links the pair of left and right brake pedal devices 210, 210. In this tractor 10, the parking brake is in turned active by a stepping-in operation of the brake pedal device 210, while the pair of left and right brake pedal devices 210, 210 are linked together through the connecting rod 120. Further, the tractor 10 of the other embodiment is structured so that the operation lever 140 is operable when the braking device is operated and the parking brake is active, and when the parking brake is deactivated, the operation lever 140 is not operable.

This means that, for example, while the parking brake is not active, the operation lever 140 comes close to the dashboard 16 which eliminates the operation area for the operation lever 140, and while the parking brake is active, the operation lever 140 separates from the dashboard 16, which ensures the operation area for the operation lever 140.

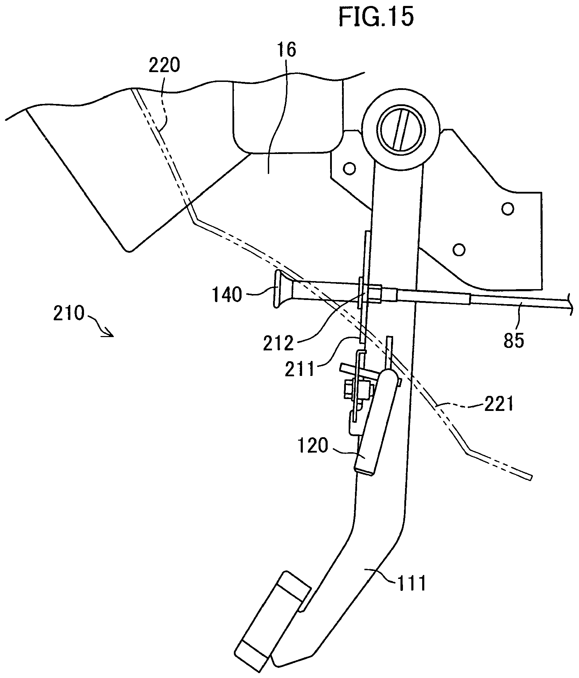

FIG. 15 is a side view showing a state where the brake pedal device 210 related to the other embodiment is rotated. FIG. 15 shows the position of the brake arm 111 while the parking brake is active. FIG. 15 (FIG. 14) further shows the lines 220 and 221 of the dashboard 16 on the side of the driver sheet 20 (on the rear side). The front-rear direction is segmented at the rectilinear line 220 of the dashboard 16 extended from the above to downward and tilted forward. On the other hand, at the line 221 on the lower front side of the line 220, which is in a shape of bulging upward, the dashboard 16 segments the left/right direction, and the up-down direction of the line 221 is opened.

As shown in FIG. 14, the operation lever 140 is above the line 221 of the dashboard 16, during the state where the parking brake is inactive. Further, the operation lever 140 and the line 220 of the dashboard 16 are close to each other. Therefore, even if the operator tries to pull the operation lever 140, the dashboard 16 at the line 220 gets in the way, disabling the operation. That is, while the parking brake is inactive, the operation area for the operation lever 140 is vanished, thus causing an inoperable state.

On the other hand, as shown in FIG. 15, the operation lever 140 is below the line 221 of the dashboard 16, during the state where the parking brake is active. To add this, the operation lever 140 and the line 220 of the dashboard 16 are distanced from each other. Therefore, when the operation lever 140 is pulled, the dashboard 16 at the line 220 does not get in the way of the operation. That is, while the parking brake is active, the operation area for the operation lever 140 is ensured, thus causing an operable state. With the above structure, an operable state and an inoperable state of the operation lever 140 can be physically switched, and mistakes in operation can be prevented. Thus, there is provided a tractor 10 having a lock mechanism 80 for the engine hood 11, which is further excellent in workability in a situation requiring unlocking.

The operable state and the inoperable state in other viewpoints mean the operation lever 140 being in a position blocked by the dashboard 16 when the parking brake is inactive, and in a position exposed from the dashboard 16 when the parking brake is active.

As hereinabove described, when the parking brake is inactive, the operation lever 140 is above the line 221 of the dashboard 16 (see FIG. 14). Further, when viewed from the driver sheet 20, the operation lever 140 is positioned on a side over the line 220 of the dashboard 16. Therefore, the operating lever 140 is positioned at the blind spot from the driver sheet 20. That is, while the parking brake is inactive, the operation lever 140 is in a position to be blocked by the dashboard 16, and in the inoperable state.

On the other hand, the operation lever 140 is below the line 221 of the dashboard 16, during the state where the parking brake is active (see FIG. 15). Further, when viewed from the driver sheet 20, the operation lever 140 is positioned on a side over the line 220 of the dashboard 16. Therefore, while the parking brake is active, the operation lever 140 is in a position exposed from the dashboard 16, and is in the operable state. With the above structure, an operable state and an inoperable state of the operation lever 140 can be visually switched, and mistakes in operation can be prevented. Thus, there is provided a tractor 10 having a lock mechanism 80 for the engine hood 11, which is further excellent in workability in a situation requiring unlocking.

As described, the tractor 10 of the other embodiment is structured so that the parking brake is maintained in an active state by the stepping-in operation of one of a pair of left and right brake pedal devices 210, 210, for example, the left brake pedal device 210. Further, the operation lever 140 is attached to the brake arm 111 of the other brake pedal device 210, for example, to the right brake pedal device 210. Therefore, while the left and right brake pedal devices 210, 210 are not linked to each other, the operation lever 140 attached to the right brake pedal device 210 does not move even if the step-in operation is performed on the left brake pedal device 210, turning the parking brake active.

With the structure as described, the operable state of the operation lever 140 is prevented while the left and right brake pedal devices 210, 210 are not linked to each other, and mistakes in operation can be prevented. In other words, the operation lever 140 is not brought into the operable state unless the tractor 10 is fully stopped and the parking brakes on the left and right are both active. Therefore, the lock bar 81 will not be lifted above the hook portion 95 while the tractor 10 is running. Thus, there is provided a tractor 10 having a lock mechanism 80 for the engine hood 11, which is further excellent in workability in a situation requiring unlocking.

As described the other embodiment provides a tractor 10 including an engine hood 11 configured to be openable and closable with respect to a machine body, and a cabin 19 behind the engine hood 11, including: a lock mechanism 80 configured to lock the engine hood 11; an operation lever 140 configured to unlock the lock mechanism 80; and a wire 85 configured to transmit operation of the operation lever 140 to the lock mechanism 80, between the lock mechanism 80 and the operation lever 140, wherein the lock mechanism 80 is disposed in the engine hood 11, on one side of the front-rear direction of the machine body, the operation lever 140 is disposed in the cabin 19, a dashboard 16 is disposed in a front portion of the cabin 19, a brake pedal device 210 for activating and deactivating a braking device is disposed below the dashboard 16, the operation lever 140 is brought into an operable state when the braking device is operated and a parking brake is active, and the operation lever 140 is brought into an inoperable state when the parking brake is inactive. Therefore, mistakes in operation can be prevented. Thus, there is provided a tractor 10 having a lock mechanism 80 for the engine hood 11, which is excellent in workability in a situation requiring unlocking.

It should be noted that the operation lever 140 may not be attached to the brake pedal device 210, and may be attached to, for example, a dashboard 16 and may be structured to be operable state when the parking brake is active.

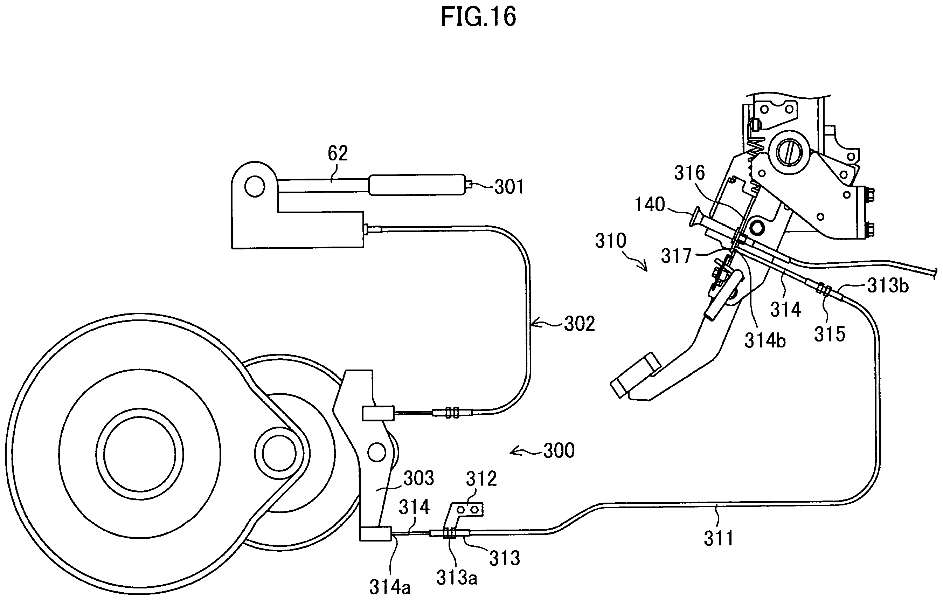

Next, the following details a modification of the tractor 10 related to the other embodiment. FIG. 16 is a side view showing a modification of the braking device related to the other embodiment. In the modification of the tractor 10 related to the other embodiment, another dynamic force transmission member is provided between a brake pedal device 310 and a hand brake device 300.

The hand brake lever 62 structuring the hand brake device 300 is formed in a rod-like shape extended in the front-rear direction on the right side of the arm-rest 56 (see FIG. 2). The hand brake lever 62 is provided so as to rotate in the up-down directions with it rear side as the axis. The hand brake lever 62 is structured so as to lift by being pulled upward, and pushed down by being pressed downward while a button 301 at the front end of the hand brake lever 62 is pressed.

The tractor 10 has a structure such that an operation of the hand brake lever 62 is transmitted to another braking device by a link mechanism 302 such as wire. To the link mechanism 302, leading ends of left and right hand brake operation levers 303, 303 are rotatably connected. The hand brake operation levers 303, 303 are structured so their rotation activates and deactivates the other braking devices. In the tractor 10 having the above described connection structure, the parking brake is turned active when the hand brake lever 62 is lifted, and the parking brake is turned inactive when the hand brake lever 62 is pushed down.

In the modification of the tractor 10 related to the other embodiment, a wire 311 serving as the other dynamic force transmission member is provided between the brake pedal device 310 and the hand brake operation lever 303 structuring the hand brake device 300. It should be noted that the brake pedal device 310 is positioned on the right side of the machine body, the wire 311 is preferably provided between the hand brake operation lever 303 on the right side and the brake pedal device 310.

As exemplified in FIG. 16, an axle side wire attaching strut 312 having a notch is provided in front of the right side hand brake operation lever 303, and one end 313a of an outer wire 313 of the wire 311 is fixed. To the right side hand brake operation lever 303, one end 314a of an inner wire 314 of the wire 311 is fixed.

On the other hand, as exemplified in FIG. 16, a pedal side wire attaching strut 315 having a notch is provided in front of the right brake arm 111 of the brake pedal device 310, and the other end 313b of the outer wire 313 of the wire 311 is fixed. To an operation lever attaching strut 316 structuring the brake pedal device 310, a notch 317 different from the above-mentioned notch 212 (see FIG. 14) is formed. To this notch 317, the other end 314b of the inner wire 314 of the wire 311 is fixed.

In the modification of the tractor 10 related to the other embodiment having the above described connection structure, lifting the hand brake lever 62 activates the parking brake and rotates the right brake arm 111 of the brake pedal device 310. That is, the modification of the tractor 10 related to the other embodiment is structured so that the brake pedal device 310 operates in association with an operation of activating and deactivating another braking device by the hand brake lever 62. Thus, the modification of the tractor 10 of the other embodiment is also structured so that the operation lever 140 is in the operable state when the braking device is operated and the parking brake is active, and when the parking brake is deactivated, the operation lever 140 is in the inoperable state.

With the above structure, the operable state and the inoperable state of the operation lever 140 can be switched by two systems of the brake pedal device 310 and the hand brake device 300, and hence mistakes in operation can be prevented. Thus, there is provided a tractor 10 having a lock mechanism 80 for the engine hood 11, which is further excellent in workability in a situation requiring unlocking.

### Industrial Applicability

A working vehicle disclosed herein is not limited to a tractor 10, and is suitably applicable to working vehicles such as transplanting machines and construction machine, which has an engine hood 11, a DPF 100, and a brake pedal device 110 (210, 310), particularly left and right brake pedal devices 110, 110 (210, 210, 310, 310).

### Reference Signs List

- 10: tractor (working vehicle)
- 11: engine hood
- 16: dashboard
- 19: cabin (driving unit)
- 52: brake pedal
- 62: emergency brake lever
- 80: lock mechanism
- 81: lock bar
- 82: fitting member
- 83: lock catch
- 84: pop-up spring (elastic member)
- 85, 311: wire
- 95: hook part
- 100: DPF (exhaust processing device)
- 110, 210, 310: brake pedal device
- 111: brake arm
- 120: connecting rod (connection member)
- 140: operation lever (operation unit)
- 142: fix plate
- 143: clamp
- 220, 221: dashboard line
- 300: hand brake device

## Claims

1. A working vehicle (10) including an engine hood (11) configured to be openable and closable with respect to a machine body, and a driving unit (19) behind the engine hood (11), comprising:
a lock mechanism (80) configured to lock the engine hood (11);
an operation unit (140) configured to unlock the lock mechanism (80); and
a dynamic force transmission member (85) configured to transmit operation of the operation unit (140) to the lock mechanism (80), between the lock mechanism (80) and the operation unit (140),
wherein the lock mechanism (80) is disposed in the engine hood (11), on one side of the front-rear direction of the machine body, and the operation unit (140) is in the driving unit (19), and
**characterized in that**
the working vehicle (10) further comprises:
a dashboard (16) on a front side of the driving unit (19); and
brake pedal devices (110; 210; 310) below the dashboard (16), which devices are configured to activate and deactivate braking devices,
wherein the operation unit (140) is in an operable state, when the braking devices are operated, and a parking brake is active, and
the operation unit (140) is in an inoperable state when the parking brake is inactive, and
the brake pedal devices (210; 310) each includes
an arm (111) which extends below the dashboard (16), and rotates with respect to the machine body, and
the operation unit (140) is attached to the arm (111);
when the parking brake is inactive, the operation unit (140) is close to the dashboard (16) and an operation area for the operation unit (140) is vanished; and
when the parking brake is active, the operation unit (140) is apart from the dashboard (16) so that the operation area for the operation unit (140) is ensured.

2. The working vehicle (10) according to claim 1, comprising a dashboard (16) on a front side of the driving unit (19),
wherein the operation unit (140) is provided below the dashboard (16).

3. The working vehicle according to any one of claims 1 to 2, wherein the operation unit (140) is
positioned to be blocked by the dashboard (16), when the parking brake is inactive, and
positioned to be exposed from the dashboard (16) when the parking brake is active.

4. The working vehicle according to any one of claims 1 to 3, wherein:
the brake pedal devices (210; 310) are structured by a pair of left and right brake pedal devices (210; 310) which are associated with left and right braking devices;
a connection member (120) connecting the left and right brake pedal devices (210; 310) into one piece is further provided;
a stepping-in operation on one brake pedal device (210; 310) out of the left and right brake pedal devices (210; 310) holds the parking brake in an active state; and
the operation unit (140) is attached to the arm (111) of another one of the brake pedal devices (210; 310).

5. The working vehicle (10) according to any one of claims 1 to 4, further comprising:
a hand brake device (300) configured to activate and deactivate another braking device; and
another dynamic force transmission member (311) between the brake pedal devices (310) and the hand brake device (300),
wherein the brake pedal devices (310) operate in association with an operation of activating and deactivating said another braking device by the hand brake device (300).

6. The working vehicle according to any one of claims 1 to 5, wherein:
the engine hood (11) houses an exhaust processing device (100) on either side relative to the left/right direction of the machine body; and
the dynamic force transmission member (85) is installed on the opposite side of the exhaust processing device (100) relative to the machine body.

7. The working vehicle according to any one of claims 1 to 6, wherein:
the lock mechanism (80) comprises:
a lock bar (81) attached to one side out of the machine body and the engine hood (11);
a fitting member (82) attached to the other side out of the machine body and the engine hood (11), which includes a fitting portion (87) where the lock bar (81) fits;
a lock catch (83) attached to the other side, and including a hook portion (95) configured to rotate in association with a movement of the dynamic force transmission member (85);
an elastic member (84) attached between the machine body and the engine hood (11), which biases the engine hood (11) in a direction of opening,
wherein, when the engine hood (11) is closed against the biasing force of the elastic member (84), and when the lock bar (81) is positioned at the fitting portion (87), the hook portion (95) locks the lock bar (81), thus locking the engine hood (11).

8. The working vehicle according to any one of claims 1 to 7, wherein the dynamic force transmission member (85) is structured by a wire.

9. The working vehicle according to claim 6, wherein the dynamic force transmission member (85) is fixed, by a clamp (143), to a fix plate (142) disposed on the opposite side of the exhaust processing device (100) relative to the left and right of the machine body.

10. The working vehicle according to any one of claims 1 to 9, wherein the driving unit (19) is structured by a cabin.

## Patentansprüche

1. Arbeitsfahrzeug (10), das eine Motorhaube (11) enthält, die konfiguriert ist, um in Bezug auf einen Maschinenkörper öffnungs- und schließbar zu sein, und eine Antriebseinheit (19) hinter der Motorhaube (11), umfassend:
einen Verriegelungsmechanismus (80), der konfiguriert ist, um die Motorhaube (11) zu verriegeln;
eine Betätigungseinheit (140), die konfiguriert ist, um den Verriegelungsmechanismus (80) zu entriegeln; und
ein dynamisches Kraftübertragungselement (85), das konfiguriert ist, um eine Betätigung der Betätigungseinheit (140) zu dem Verriegelungsmechanismus (80) zu übertragen, zwischen dem Verriegelungsmechanismus (80) und der Betätigungseinheit (140),
wobei der Verriegelungsmechanismus (80) in der Motorhaube (11) auf einer Seite der Richtung von vorn nach hinten des Maschinenkörpers angeordnet ist und die Betätigungseinheit (140) in der Antriebseinheit (19) ist, und
**dadurch gekennzeichnet, dass**
das Arbeitsfahrzeug (10) weiterhin folgendes umfasst:
ein Armaturenbrett (16) auf einer vorderen Seite der Antriebseinheit (19); und
Bremspedalvorrichtungen (110; 210; 310) unter dem Armaturenbrett (16), welche Vorrichtungen konfiguriert sind, um Bremsvorrichtungen zu aktivieren und deaktivieren,
wobei die Betätigungseinheit (140) in einem betätigbaren Zustand ist, wenn die Bremsvorrichtungen betätigt sind und eine feststellbare Bremse aktiv ist, und
die Betätigungseinheit (140) in einem nicht betätigbaren Zustand ist, wenn die feststellbare Bremse inaktiv ist, und
die Bremspedalvorrichtungen (210; 310) jeweils folgendes enthalten:
einen Arm (111), der sich unter dem Armaturenbrett (16) erstreckt und sich in Bezug auf den Maschinenkörper dreht, und
die Betätigungseinheit (140) an dem Arm (111) angebracht ist;
wenn die feststellbare Bremse inaktiv ist, die Betätigungseinheit (140) nahe dem Armaturenbrett (16) ist und ein Betätigungsbereich für die Betätigungseinheit (140) verschwunden ist; und
wenn die feststellbare Bremse aktiv ist, die Betätigungseinheit (140) entfernt vom Armaturenbrett (16) ist, so dass der Betätigungsbereich für die Betätigungseinheit (140) sichergestellt ist.

2. Arbeitsfahrzeug (10) nach Anspruch 1, das ein Armaturenbrett (16) auf einer vorderen Seite der Antriebseinheit (19) umfasst,
wobei die Betätigungseinheit (140) unter dem Armaturenbrett (16) vorgesehen ist.

3. Arbeitsfahrzeug nach einem der Ansprüche 1 bis 2, wobei die Betätigungseinheit (140)
positioniert ist, um durch das Armaturenbrett (16) blockiert zu sein, wenn die feststellbare Bremse inaktiv ist, und
positioniert ist, um vom Armaturenbrett (16) freigelegt zu sein, wenn die feststellbare Bremse aktiv ist.

4. Arbeitsfahrzeug nach einem der Ansprüche 1 bis 3, wobei:
die Bremspedalvorrichtungen (210; 310) durch ein Paar von linken und rechten Bremspedalvorrichtungen (210; 310) strukturiert sind, die mit linken und rechten Bremsvorrichtungen assoziiert sind;
weiterhin ein Verbindungselement (120) vorgesehen ist, das die linken und rechten Bremspedalvorrichtungen (210; 310) in ein Stück verbindet;
eine Einsteig- bzw. Einschaltbetätigung an einer Bremspedalvorrichtung (210; 310) aus den linken und rechten Bremspedalvorrichtungen (210; 310) die feststellbare Bremse in einem aktiven Zustand hält; und
die Betätigungseinheit (140) an dem Arm (111) einer weiteren der Bremspedalvorrichtungen (210; 310) angebracht ist.

5. Arbeitsfahrzeug (10) nach einem der Ansprüche 1 bis 4, weiterhin umfassend:
eine Handbremsenvorrichtung (300), die konfiguriert ist, um eine weitere Bremsvorrichtung zu aktivieren und deaktivieren; und
ein weiteres dynamisches Kraftübertragungselement (311) zwischen den Bremspedalvorrichtungen (310) und der Handbremsenvorrichtung (300),
wobei die Bremspedalvorrichtungen (310) in Verbindung mit einer Betätigung eines Aktivierens und Deaktivierens der weiteren Bremsvorrichtung durch die Handbremsenvorrichtung (300) arbeiten.

6. Arbeitsfahrzeug nach einem der Ansprüche 1 bis 5, wobei:
die Motorhaube (11) eine Abgasverarbeitungsvorrichtung (100) auf jeder Seite relativ zur linken/rechten Richtung des Maschinenkörpers unterbringt; und
das dynamische Kraftübertragungselement (85) auf der gegenüberliegenden Seite der Abgasverarbeitungsvorrichtung (100) relativ zum Maschinenkörper installiert ist.

7. Arbeitsfahrzeug nach einem der Ansprüche 1 bis 6, wobei:
der Verriegelungsmechanismus (80) folgendes umfasst:
eine Verriegelungsstange (81), die an einer Seite aus dem Maschinenkörper und der Motorhaube (11) heraus angebracht ist;
ein an der anderen Seite aus dem Maschinenkörper und der Motorhaube (11) heraus angebrachtes Passelement (82), das einen Passteilbereich (87) enthält, wo die Verriegelungsstange (81) anliegt;
eine Verriegelungsklinke (83), die an der anderen Seite angebracht ist und einen Hakenteilbereich (95) enthält, der konfiguriert ist, um sich in Verbindung mit einer Bewegung des dynamischen Kraftübertragungselements (85) zu drehen;
ein zwischen dem Maschinenkörper und der Motorhaube (11) angebrachtes elastisches Element (84), das die Motorhaube (11) in einer Öffnungsrichtung vorspannt,
wobei dann, wenn die Motorhaube (11) gegenüber der Vorspannkraft des elastischen Elements (84) geschlossen ist und wenn die Verriegelungsstange (81) bei dem Passteilbereich (87) positioniert ist, der Hakenteilbereich (95) die Verriegelungsstange (81) verriegelt, um dadurch die Motorhaube (11) zu verriegeln.

8. Arbeitsfahrzeug nach einem der Ansprüche 1 bis 7, wobei das dynamische Kraftübertragungselement (85) durch einen Draht strukturiert ist.

9. Arbeitsfahrzeug nach Anspruch 6, wobei das dynamische Kraftübertragungselement (85) durch eine Klemme (143) an einer Fixierplatte (142) fixiert ist, die auf der gegenüberliegenden Seite der Abgasverarbeitungsvorrichtung (100) relativ zur linken und rechten des Maschinenkörpers angeordnet ist.

10. Arbeitsfahrzeug nach einem der Ansprüche 1 bis 9, wobei die Antriebseinheit (19) durch einen Führerraum strukturiert ist.

## Revendications

1. Véhicule de travail (10) incluant un capot moteur (11) configuré de manière à pouvoir être ouvert et fermé par rapport à un corps de machine et une unité de conduite (19) derrière le capot moteur (11), le véhicule de travail comprenant :
un mécanisme de verrouillage (80) configuré pour verrouiller le capot moteur (11),
un module d'actionnement (140) configuré pour déverrouiller le mécanisme de verrouillage (80),
un organe de transmission dynamique de force (85) configuré pour transmettre l'actionnement du module d'actionnement (140) au mécanisme de verrouillage (80), entre le module de verrouillage (80) et le module d'actionnement (140),
le mécanisme de verrouillage (80) étant disposé sous le capot moteur (11) sur un côté du sens avant-arrière du corps de machine, et le module d'actionnement (140) est situé dans l'unité de conduite (19), et
**caractérisé en ce que**
le véhicule de travail (10) comprend en plus :
un tableau de bord (16) sur un côté avant de l'unité de conduite (19), et
des systèmes de pédale de frein (110, 210, 310) au-dessous du tableau de bord (16), lesdits systèmes étant configurés pour activer et désactiver des dispositifs de freinage,
le module d'actionnement (140) étant en un état fonctionnel lorsque les dispositifs de freinage sont actionnés et qu'un frein de stationnement est actif, et
le module d'actionnement (140) étant en un état non fonctionnel lorsque le frein de stationnement est inactif, et
les systèmes de pédale de frein (210, 310) incluant chacun
un bras (111) qui s'étend au-dessous du tableau de bord (16) et tourne par rapport au corps de machine, et
le module d'actionnement (140) étant fixé au bras (111),
lorsque le frein de stationnement est inactif, le module d'actionnement (140) étant proche du tableau de bord (16) faisant disparaître une zone d'actionnement pour le module d'actionnement (140), et
lorsque le frein de stationnement est actif, le module d'actionnement (140) est espacé du tableau de bord (16) rendant disponible la zone d'actionnement pour le module d'actionnement (140).

2. Véhicule de travail (10) suivant la revendication 1, le véhicule comprenant un tableau de bord (16) sur un côté avant de l'unité de conduite (19),
le module d'actionnement (140) étant prévu au-dessous du tableau de bord (16).

3. Véhicule de travail (10) suivant une des revendications 1 à 2, en ce que le module d'actionnement (140) est
positionné de sorte à être bloqué par le tableau de bord (16) lorsque le frein de stationnement est inactif, et
positionné de sorte à être exposé par le tableau de bord (16) lorsque le frein de stationnement est actif.

4. Véhicule de travail suivant une des revendications 1 à 3, en ce que :
les systèmes de pédale de frein (210, 310, sont constitués par une paire de systèmes de pédale de frein gauche et droite (210, 310) qui sont associés à des dispositifs de freinage gauche et droite,
un élément de liaison (120) reliant les systèmes de pédale de frein gauche et droite (210, 310) d'un seul tenant étant prévu en plus,
un actionnement par appui sur un système de pédale de frein (210, 310) parmi les systèmes de pédale de frein gauche et droite (210, 310) maintenant le frein de stationnement en un état actif, et
le module d'actionnement (140) est fixé au bras (111) d'un autre système de pédale de frein parmi les systèmes de pédale de frein (210, 310).

5. Véhicule de travail (10) suivant une des revendications 1 à 4, comprenant en plus :
un système de frein à main (300) configuré pour activer et désactiver un autre dispositif de freinage, et
un autre organe de transmission dynamique de force (311) entre les systèmes de pédale de frein (310) et le système de frein à main (300),
les systèmes de pédale de frein (310) fonctionnant en association avec une opération d'activation et de désactivation dudit autre dispositif de freinage par le système de frein à main (300).

6. Véhicule de travail (10) suivant une des revendications 1 à 5, en ce que
le capot moteur (11) loge un dispositif de traitement d'échappement (100) de chaque côté par rapport au sens gauche-droite du corps de machine, et
l'organe de transmission dynamique de force (85) est installé sur le côté opposé du dispositif de traitement d'échappement (100) par rapport au corps de machine.

7. Véhicule de travail suivant une des revendications 1 à 6, en ce que :
le mécanisme de verrouillage (80) comprend :
une barre de verrouillage (82) fixée sur un côté soit du corps de machine, soit du capot moteur (11),
un élément de raccord (82) fixé à l'autre côté soit du corps de machine, soit du capot moteur (11) et incluant une partie de raccordement (87), à laquelle la barre de verrouillage (81) est raccordée,
un mentonnet de verrouillage (83) fixé sur l'autre côté et incluant une partie de crochet (95) configuré pour tourner en association avec un mouvement de l'organe de transmission dynamique de force (85),
un élément élastique (84) fixé entre le corps de machine et le capot moteur (11), élément élastique qui sollicite le capot moteur (11) dans un sens d'ouverture,
la partie crochet (95) verrouillant la barre de verrouillage (81) et, par conséquent, le capot moteur (11) lorsque celui-ci est fermé contre la force de sollicitation de l'élément élastique (84) et lorsque la barre de verrouillage (81) est positionnée sur la partie de raccordement (87).

8. Véhicule de travail (10) suivant une des revendications 1 à 7, en ce que l'organe de transmission dynamique de force (85) est réalisé par un fil.

9. Véhicule de travail (10) suivant une des revendications, en ce que l'organe de transmission dynamique de force (85) est fixé par une bride (143) à une plaque de fixation (142) disposée sur le côté opposé du dispositif de traitement d'échappement (100) par rapport à la gauche et à la droite du corps de machine.

10. Véhicule de travail (10) suivant une des revendications 1 à 9, en ce que l'unité de conduite (19) est réalisée par une cabine.
